(19) **Europäisches Patentamt / European Patent Office / Office européen des brevets**

(11) **EP 2 542 338 B1**

(12) # EUROPEAN PATENT SPECIFICATION

(45) Date of publication and mention
of the grant of the patent:
**19.02.2020 Bulletin 2020/08**

(21) Application number: **11750115.5**

(22) Date of filing: **04.03.2011**

(51) Int Cl.:
**B01J 23/10** (2006.01)    **C01B 3/02** (2006.01)
**C01B 3/26** (2006.01)    **C01B 3/34** (2006.01)

(86) International application number:
**PCT/CA2011/000224**

(87) International publication number:
**WO 2011/106876 (09.09.2011 Gazette 2011/36)**

(54) **CATALYSTS FOR FEEDSTOCK-FLEXIBLE AND PROCESS-FLEXIBLE HYDROGEN PRODUCTION**

KATALYSATOREN FÜR ROHSTOFFFLEXIBLE UND PROZESSFLEXIBLE WASSERSTOFFHERSTELLUNG

CATALYSEURS POUR PRODUIRE DE L'HYDROGÈNE EN FONCTION DE LA CHARGE ET DU PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2010 US 311055 P**

(43) Date of publication of application:
**09.01.2013 Bulletin 2013/02**

(73) Proprietor: **University of Regina
Regina, SK S4S 0A2 (CA)**

(72) Inventors:
  • **IDEM, Raphael
    Regina
    Saskatchewan S4V 2S1 (CA)**
  • **MOHAMMED, Ataullah Khan
    Regina
    Saskatchewan S4S 3C5 (CA)**
  • **IBRAHIM, Hussameldin
    Regina
    Saskatchewan S4R 8K3 (CA)**
  • **TONTIWACHWUTHIKUL, Paitoon
    Regina
    Saskatchewan S4S 2V2 (CA)**
  • **SUKONKET, Thitinat
    Banggrui 11130 (TH)**

  • **KHAN, Mohammed Faysal Ahamed
    Regina
    Saskatchewan S4S 5H5 (CA)**
  • **SENGUPTA, Protyai
    Regina
    Saskatchewan S4S 6P8 (CA)**
  • **ZAHID, Mohammed Abu
    Saskatchewan S4S 6P8 (CA)**
  • **SAHA, Bappy
    Regina
    Saskatchewan S4S 2W5 (CA)**

(74) Representative: **J A Kemp LLP
14 South Square
Gray's Inn
London WC1R 5JJ (GB)**

(56) References cited:
**WO-A1-03/082740       WO-A1-2006/099716
WO-A1-2009/028113     WO-A1-2009/158009
CA-A1- 2 429 412**

  • **ATAULLAH KHAN ET AL: "Catalytic Activity of
    Various 5 wt?% Ni/Ce 0.5 Zr 0.33 M 0.17 O 2-[delta]
    Catalysts for the CO 2 Reforming of CH 4 in the
    Presence and Absence of Steam", ENERGY &
    FUELS, vol. 26, no. 1, 19 January 2012
    (2012-01-19), pages 365-379, XP055128352, ISSN:
    0887-0624, DOI: 10.1021/ef2013562**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

**Field of the Application**

The present application is in the field of catalysts for the conversion of fuel-based (both fossil & biomass derived) feedstocks into hydrogen.

**Background of the Application**

One of the advantages of hydrogen gas ($H_2$) as an energy carrier is that it carries a high energy per unit mass (one kg of hydrogen has approximately the same energy content, as that of 1 gallon/2.7 kg of gasoline), thus potentially facilitating energy portability [1]. In addition, pure hydrogen is a non-polluting fuel, producing only water vapor at its point of use, so that pollutants will not be dispersed throughout a hydrogen energy economy but will primarily be localized where hydrogen and other elements of the energy system are produced. Hydrogen can be produced from a wide variety of primary energy sources and different production technologies or processes [2]. At present, nearly all of the worldwide production of hydrogen gas ($H_2$) is from steam reforming of natural gas. This production amounts to approximately 40 billion standard cubic feet per day and is used primarily to manufacture fertilizer, remove sulfur and nitrogen from refined petroleum products, and to manufacture chemicals such as methanol [3]. Secondary uses are in petroleum refineries and in manufacturing processes for chemicals, and metals. Long-term prospects for a hydrogen economy would be significantly increased/improved by the development of processes that are efficient and economically viable on a small scale, so that reforming can be distributed, thereby minimizing the distribution and transportation of hydrogen. Currently there are numerous developmental and demonstration projects that focus on building a hydrogen infrastructure and refueling network for future automobile and other applications [4]. The long-term aim of such projects is to steer towards a zero-emission society. This can be conceived only, when a technology is developed which can deliver hydrogen on site and on demand, i.e., by adopting a decentralize approach to the $H_2$ production problem. This 'on-site' production capability will overcome one of the main barriers towards the launching of the hydrogen economy because it addresses the problems related to $H_2$ storage, transportation, and compression for transportation.

CA 2 429 412 A1 describes a method of producing nano-size grained particles by preparing a solution of one or more metal cations, mixing the solution with one or more surfactants and then heating to form particles.

WO 2009/158009 A1 is concerned with catalyst systems which are substantially free of platinum group metals and comprises a substrate and a washcoat. The washcoat comprises one or more oxide solids, wherein the oxide solid is selected from a carrier material oxide, a catalyst or mixtures thereof. The catalyst comprises one or more of ZPGM transition metal catalysts, mixed metal oxide catalysts and zeolite catalysts.

WO 2009/028113 A1 relates to a low-temperature hydrogen production catalyst with oxygen vacancies in an active metal and an oxide having a rare earth element capable of changing oxygen number, especially an oxide of $CeO_2$ or $Pr_6O_{11}$ or a complex oxide of Ce and Zr or Ce, Zr and Y.

There are numerous reforming catalysts (commercial/ developmental) available in the markets, which can reform a specific feed to produce hydrogen implying that these are feedstock specific. However, to date the inventors are not aware of any report of catalysts that can be used for the production of hydrogen which are feedstock flexible and/or process flexible. The feedstock referred to here can come from hydrocarbons or oxygenated hydrocarbons (i.e. fossil and biomass sources). In short, no catalyst has been developed for hydrogen production by a catalytic reforming process that is feedstock flexible and/or process flexible.

**Summary of the Application**

There is strong interest and advantage in developing novel, highly active, stable catalysts for $H_2$ production from either biomass-derived or fossil fuels-derived sources and making use of any reforming process. The advantages of these catalysts are feedstock flexibility, process flexibility and sustainability.

The catalyst system of the present application makes it possible to easily switch between different feedstocks and processes, without having to change the catalyst. This application therefore relates to the development of a family of catalysts which can reform any hydrocarbon feedstock including short, medium, long chain hydrocarbons, and oxygenated hydrocarbons and mixtures thereof using one or the other of reforming processes such as $CO_2$ reforming, steam reforming, steam-assisted $CO_2$ reforming, partial oxidation, autothermal reforming and combinations thereof for the feedstock. The catalysts developed involves a support made as a solid solution of three or more metal oxides; among the three or more metal oxides, two oxides that are present are ceria and zirconia, while the third or more metal oxide is any metal oxide, including oxides of main group, transition and/or inner-transition metals.

The developed catalysts are made of low cost non-noble active metals supported on high surface area multi-component mixed oxide supports. The catalysts were synthesized using a chemically efficient and optimized synthesis route, thus making them analogous for comparison and further improvisation purposes. The preparation route imparts special characteristics to the catalysts, like thermal stability, high surface area, nanostructure, mesoporosity, complex pore structure, and high oxygen storage/buffer capacity. The presence of ceria in the support is a source of oxygen sink, which together with nano-crystallinity and high metal dispersion, lead to the avoidance of carbon deposition (or coking) during reaction. As a result, the catalysts exhibit excellent durability and adaptability. The selection of the catalyst components, their composition and the specific way the catalysts are synthesized constitutes some of the factors for their superior performance. The catalysts are robust, do not deactivate due to coking, and thus are durable and consequently have very long regeneration and replacement intervals. Also, the catalysts are highly active and can achieve high hydrogen yields. Consequently, the amount of catalyst needed per unit amount of hydrogen produced is small. This implies a reduction of the size of the reactor, which in turn reduces capital expenditure. To the best of the inventors knowledge, this is the first time that a stable catalyst system has been synthesized that can be used to catalyze the generation of hydrogen from any hydrocarbon and oxygenated hydrocarbon feedstock (i.e. is feedstock flexible); and can be employed in any reforming process such as $CO_2$ reforming, steam reforming, steam-assisted $CO_2$ reforming, partial oxidation, and auto thermal reforming (i.e. process flexible). In order to show the unique attributes of the developed catalysts and the contributions of these attributes towards catalyst performance, the developed catalysts were subjected to extensive characterization using state-of-the-art techniques including XPS, HREM, Raman, In situ IR/Operando spectroscopy, TPR, BET SA/PSD, PXRD, OSC, and TG/DSC. The Operando spectroscopy assisted in observing fundamental molecular level measurements of catalyst, reactants, and products under practical reaction conditions. The catalyst structure-activity relationships obtained were used to further improve and fine-tune the catalyst design to obtain the optimal catalyst formulation for industrial/commercial applications. Also, the catalysts were subjected to extended operation cycles under realistic and stimulated feed/operation conditions to test their endurance and performance.

In one aspect, the present invention provides a catalyst support of the formula (I):

$$Ce_aZr_bM^1_cM^2_dO_2 \qquad (I)$$

wherein

a is 0.40 to 0.60;
b is 0.20 to 0.40;
c is 0.05 to 0.40;
d is 0 to 0.20;
a + b + c + d is 1; and
$M^1$ and $M^2$ are independently selected from the group consisting of Al, Ba, Ca, Gd, Hf, La, Mg, Pr, Sm, Sr, Tb and Y, wherein the catalyst support is obtainable from a surfactant assisted method comprising (i) combining aqueous solutions of precursor salts of each metal oxide, with an aqueous solution of at least one cationic, anionic, amphoteric or zwitterionic surfactant; (ii) stirring the combined solutions of (i); (iii) adding a base to adjust the pH of the combined solutions of (i) to 10 to 13 to produce a slurry comprising precipitated support; (iv) allowing the slurry to age at elevated temperatures; (v) isolating the precipitated support from the slurry; (vi) optionally washing the isolated support to remove residual surfactant or solvent and (vii) drying and calcining the isolated support; and wherein the catalyst support is suitable for use in a reforming process.

present invention also provides a catalyst of the formula (II):

$$Y\%Ni/Ce_aZr_bM^1_cM^2_dO_2 \qquad (II)$$

wherein

Y% is percent, by weight of the catalyst, of Ni and is 0.1 to 10.0; and
$Ce_aZr_bM^1_cM^2_dO_2$ is the support of formula (I) as defined above,
wherein the catalyst, when used in a reforming process, converts a fuel-based feedstock into a product comprising hydrogen.

The present invention further provides a process for the conversion of a fuel-based feedstock into hydrogen comprising (a) treating a catalyst of the formula (II) as defined above under conditions to reduce NiO to metallic Ni to provide a reduced catalyst; and (b) contacting a reactant comprising the fuel-based feedstock with the reduced catalyst under conditions for the conversion of the fuel-based feedstock into a product comprising hydrogen, wherein the conditions for the conversion of the reactant comprising fuel-based feedstock to product comprising $H_2$ are $CO_2$ reforming of methane and other hydrocarbons, partial oxidation of gasoline, partial oxidation of diesel, partial oxidation of other hydrocarbons and their mixtures, autothermal reforming of diesel and other hydrocarbons, steam assisted $CO_2$ reforming of methane and other hydrocarbons or their mixtures, steam reforming of methane or other hydrocarbons and their mixtures, gas phase steam reforming of oxygenated hydrocarbons and their mixtures, or a combination of these processes and wherein the conditions to reduce NiO to metallic Ni to provide a reduced catalyst comprise a temperature of 650 °C to 750 °C, in an atmosphere of 1% to 10% $H_2$ with the balance being $N_2$.

Other features and advantages of the present application will become apparent from the following detailed description.

## Brief description of the drawings

The embodiments of the application will now be described in greater detail with reference to the attached drawings in which:

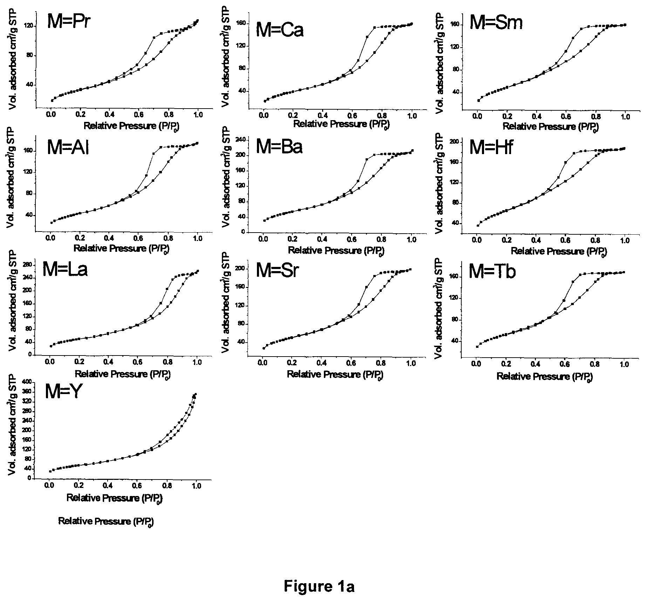

Figure 1a shows $N_2$-Isotherms of $Ce_{0.5}Zr_{0.33}M^1_{0.17}M^2_{0.0}O_2$ (M = Al, Ba, Ca, Hf, La, Pr, Sm, Sr, Tb & Y) supports prepared with surfactant/metal molar ratio = 0.5 in one example of the present application.

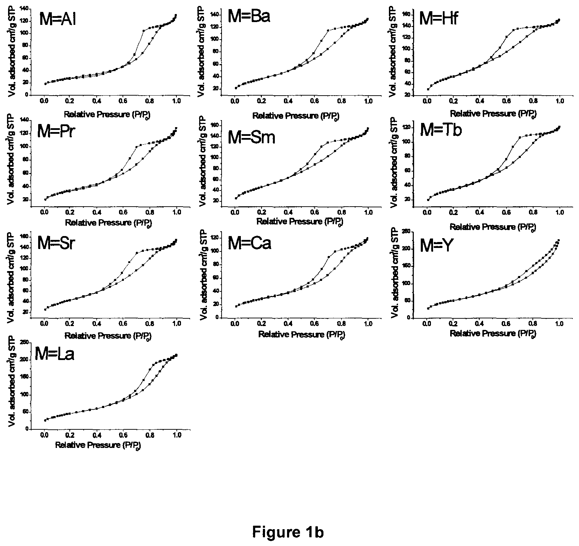

Figure 1b shows $N_2$-Isotherms of $5Ni/Ce_{0.5}Zr_{0.33}M^1_{0.17}M^2_{0.0}O_2$ ($M^1$ = Al, Ba, Ca, Hf, La, Pr, Sm, Sr, Tb & Y) catalysts where the supports were prepared with surfactant/metal molar ratio = 0.5 in one example of the present application.

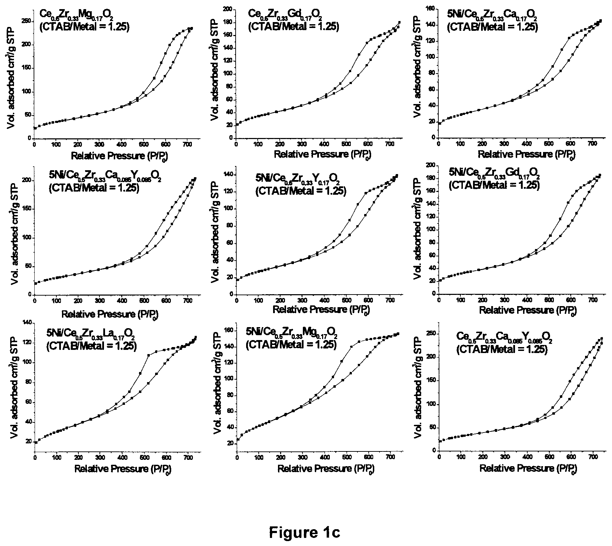

Figure 1c shows $N_2$-Isotherms of $Ce_{0.5}Zr_{0.33}M^1_{0.17}M^2_{0.0}O_2$ ($M^1$ = Gd & Mg) and $Ce_{0.5}Zr_{0.33}Ca_{0.085}Y_{0.085}O_2$ supports and $5Ni/Ce_{0.5}Zr_{0.33}M^1_{0.17}M^2_{0.0}O_2$ ($M^1$ = Ca, Gd, La, Mg, & Y) and $5Ni/Ce_{0.5}Zr_{0.33}Ca_{0.085}Y_{0.085}O_2$ catalysts where the supports were prepared with surfactant/metal molar ratio = 1.25 in one example of the present application.

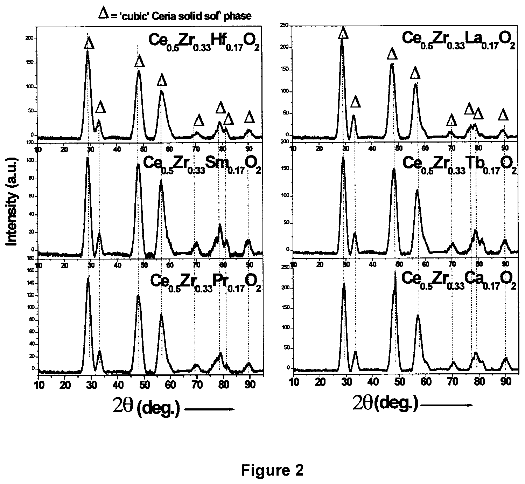

Figure 2 shows X-ray diffraction patterns of $Ce_{0.5}Zr_{0.33}M^1_{0.17}M^2_{0.0}O_2$ ($M^1$ = Ca, Hf, La, Pr, Sm, & Tb) supports prepared with surfactant/metal molar ratio = 0.5 in certain examples of the present application.

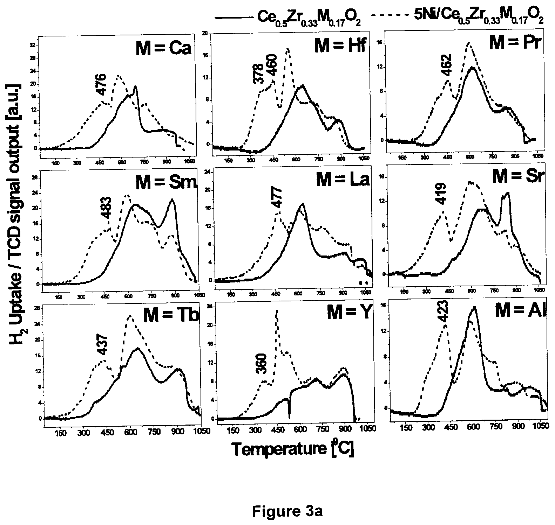

Figure 3a shows TPR patterns of $Ce_{0.5}Zr_{0.33}M^1_{0.17}M^2_{0.0}O_2$ supports and $5Ni/Ce_{0.5}Zr_{0.33}M^1_{0.17}M^2_{0.0}O_2$ catalysts ($M^1$ = Al, Ca, Hf, La, Pr, Sm, Sr, Tb, & Y) where the supports were prepared with surfactant/metal molar ratio = 0.5 in certain examples of the present application.

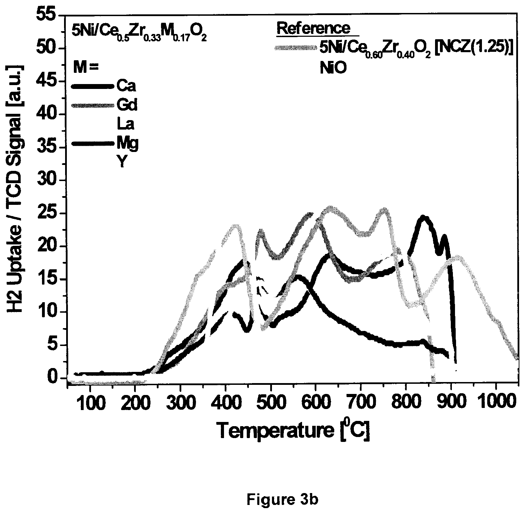

Figure 3b shows TPR patterns of $5Ni/Ce_{0.5}Zr_{0.33}M^1_{0.17}M^2_{0.0}O_2$ catalysts ($M^1$ = Ca, Gd, La, Mg, & Y) where the supports were prepared with surfactant/metal molar ratio = 1.25 in certain examples of the present application.

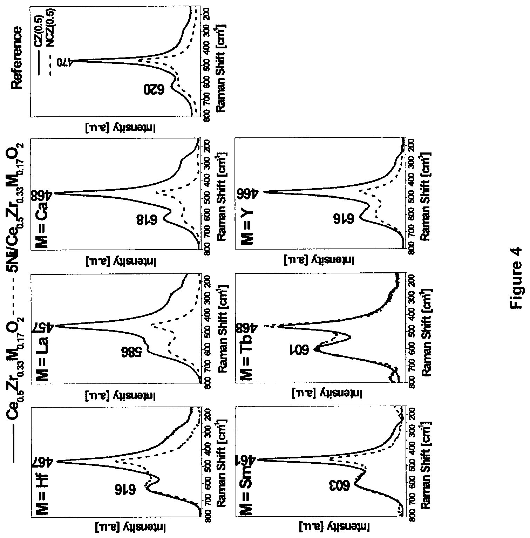

Figure 4 shows Raman spectra of $Ce_{0.5}Zr_{0.33}M^1_{0.17}M^2_{0.0}O_2$ supports and $5Ni/Ce_{0.5}Zr_{0.33}M^1_{0.17}M^2_{0.0}O_2$ catalysts ($M^1$ = Ca, Hf, La, Sm, Tb, & Y) where the supports were prepared with surfactant/metal molar ratio = 0.5 in certain examples of the present application.

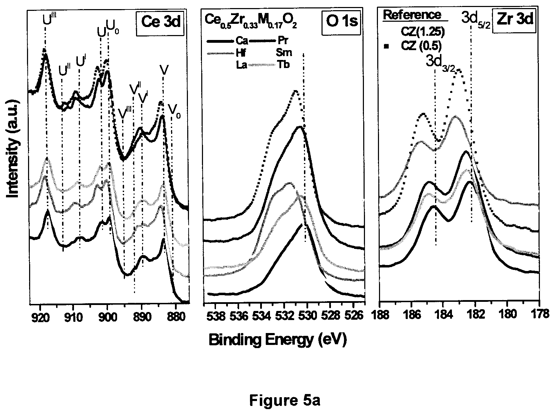

Figure 5a shows X-ray Photoelectron spectra of $Ce_{0.5}Zr_{0.33}M^1_{0.17}M^2_{0.0}O_2$ supports ($M^1$ = Ca, Hf, La, Pr, Sm, & Tb) where the supports were prepared with surfactant/metal molar ratio = 0.5 in certain examples of the present application.

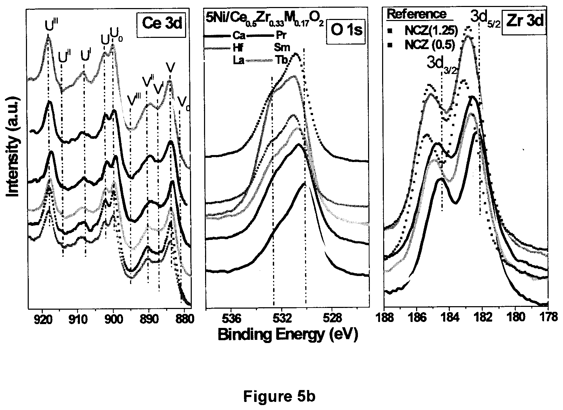

Figure 5b shows X-ray Photoelectron spectra of $5Ni/Ce_{0.5}Zr_{0.33}M^1_{0.17}M^2_{0.0}O_2$ catalysts ($M^1$ = Ca, Hf, La, Pr, Sm, & Tb) where the supports were prepared with surfactant/metal molar ratio = 0.5 in certain examples of the present application.

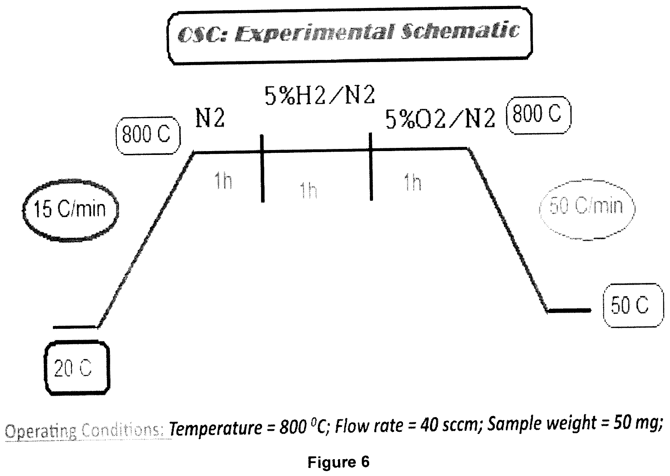

Figure 6 shows an experimental schematic of the Oxygen Storage Capacity (OSC) measurements.

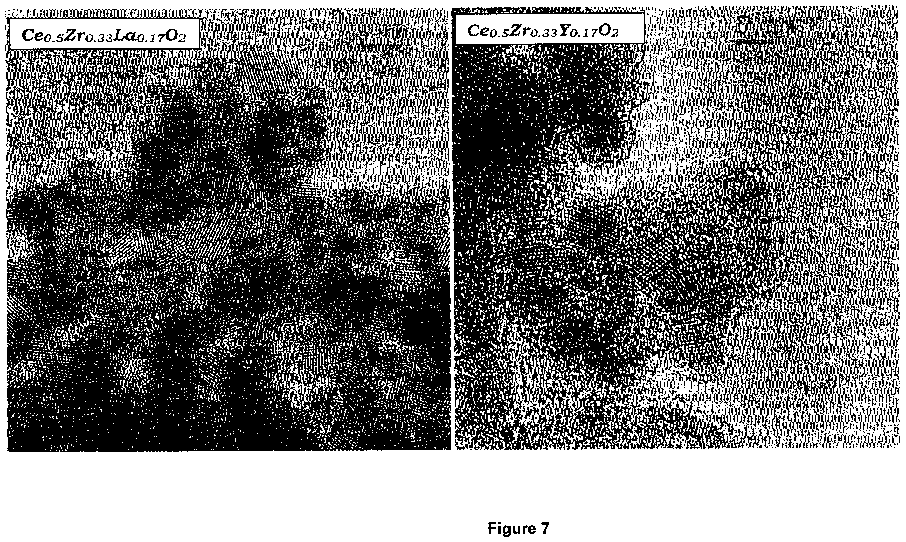

Figure 7 shows HREM images of $Ce_{0.5}Zr_{0.33}La_{0.17}O_2$ and $Ce_{0.5}Zr_{0.33}Y_{0.17}O_2$ supports, where the supports were prepared with surfactant/metal molar ratio = 0.5, in certain examples of the present application.

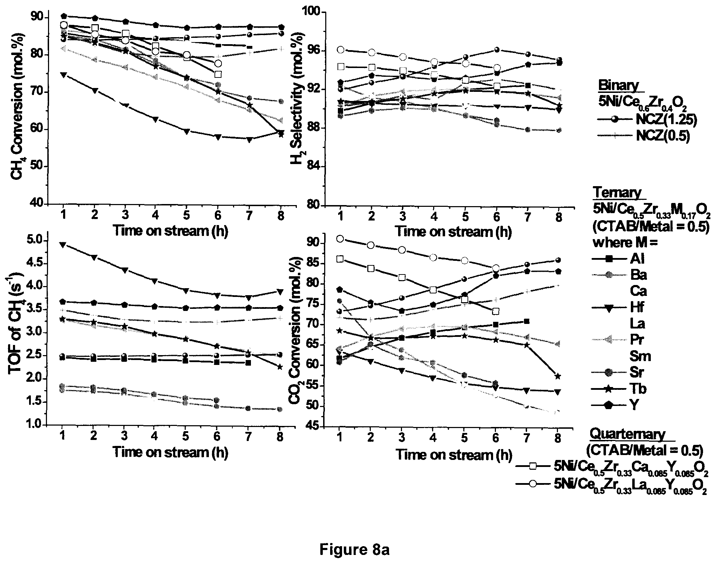

Figure 8a shows performance evaluation of titled $Ni/Ce_{0.5}Zr_{0.33}M^1_{0.17}M^2_{0.0}O_2$ ($M^1$ = Al, Ba, Ca, Hf, La, Pr, Sm, Sr, Tb, & Y) and $5Ni/Ce_{0.5}Zr_{0.33}M^1_{0.085}M^2_{0.085}O_2$ ($M^1$ = Ca, or La; $M^2$ = Y) catalysts, where the supports were prepared with CTAB/metal molar ratio = 0.5, for a $CO_2$ reforming of $CH_4$ (T = 800 °C; Feed Composition: $CH_4/CO_2/N_2$=40/40/20 vol.%; Feed flow rate = 100 sccm; $W/F_{CH4}$ = 1.49 g cat. h/mol.$CH_4$) in certain examples of the present application. The $5Ni/Ce_{0.6}Zr_{0.4}O_2$ catalysts where the supports were prepared with surfactant/metal molar ratio = 0.5 & 1.25 are also included for comparison purposes.

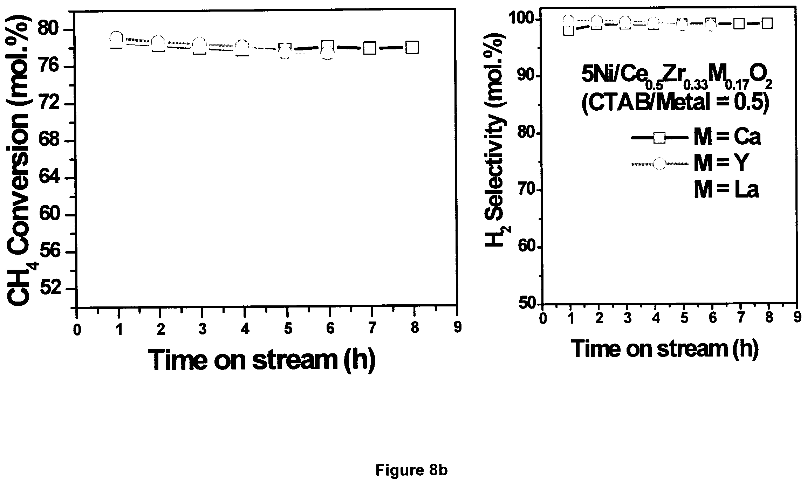

Figure 8b shows performance evaluation of titled $5Ni/Ce_{0.5}Zr_{0.33}M^1_{0.17}M^2_{0.0}O_2$ ($M^1$ = Ca, La, & Y) catalysts where the supports were prepared with CTAB/metal molar ratio = 0.5 for a $CO_2$ reforming of $CH_4$ rich natural gas and biogas (T = 900 °C; Feed Composition: $CH_4/CO_2/N_2$=50/40/10 vol.%; Feed flow rate = 100 sccm; $W/F_{CH4}$ = 1.19 g cat. h/mol.$CH_4$), in certain examples of the present application.

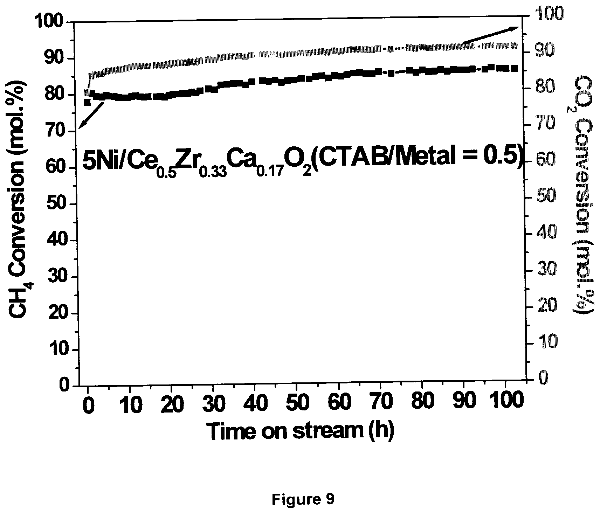

Figure 9 shows long term time-on-stream (TOS) stability studied over $5Ni/Ce_{0.5}Zr_{0.33}Ca_{0.17}O_2$ catalyst where the support was prepared with CTAB/metal molar ratio = 0.5 for a $CO_2$ reforming of $CH_4$ (T = 800 °C; Feed Composition: $CH_4/CO_2/N_2$=40/40/20 vol.%; Feed flow rate = 100 sccm; $W/F_{CH4}$ = 1.49 g cat. h/mol.$CH_4$), in an example of the present application.

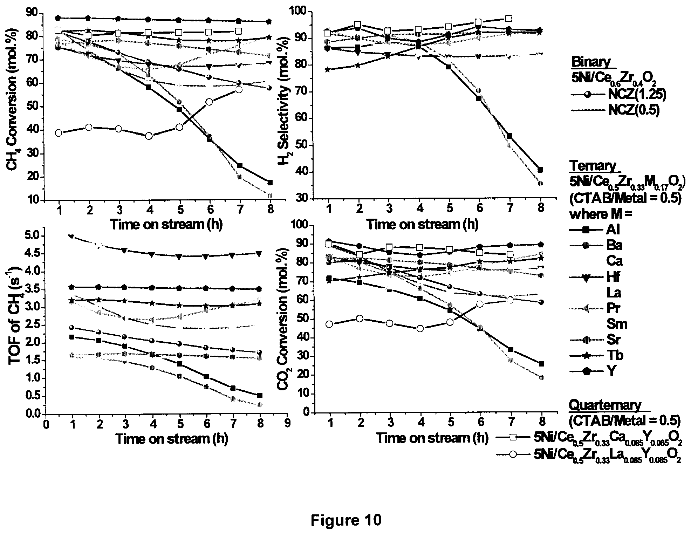

Figure 10 shows performance evaluation of $5Ni/Ce_{0.5}Zr_{0.33} M^1_{0.17}M^2_{0.0}O_2$($M^1$ = Al, Ba, Ca, Hf, La, Pr, Sm, Sr, Tb, & Y) and $5Ni/Ce_{0.5}Zr_{0.33}M^1_{0.085}M^2_{0.085}O_2$ ($M^1$ = Ca, or La; $M^2$ = Y) catalysts where the supports were prepared with CTAB/metal molar ratio = 0.5 for a steam-assisted $CO_2$ reforming of $CH_4$ (T = 800 °C; Feed Composition: $H_2O/CH_4/CO_2/N_2$=40/40/40/20 vol.%; Feed flow rate = 140 sccm; $W/F_{CH4}$ = 1.49 g cat. h/mol.$CH_4$), in certain examples of the present application. The $5Ni/Ce_{0.6}Zr_{0.4}O_2$ catalysts where the supports were prepared with surfactant/metal molar ratio = 0.5 & 1.25 are also included for comparison purposes.

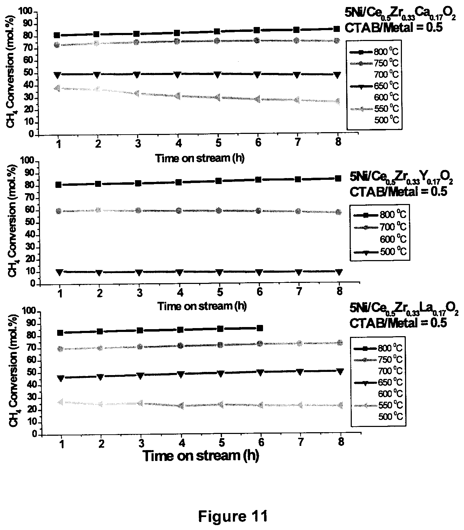

Figure 11 shows the effect of operating temperature on the performance and stability of $5Ni/Ce_{0.5}Zr_{0.33}M^1_{0.17}M^2_{0.0}O_2$ ($M^1$ = Ca, La, & Y) catalysts where the supports were prepared with CTAB/metal molar ratio = 0.5 for a steam-assisted $CO_2$ reforming of $CH_4$ (T = 800 °C; Feed Composition: $H_2O/CH_4/CO_2/N_2$=40/40/40/20 vol.%; Feed flow rate = 140 sccm; $W/F_{CH4}$ = 1.49 g cat. h/mol.$CH_4$), in certain examples of the present application.

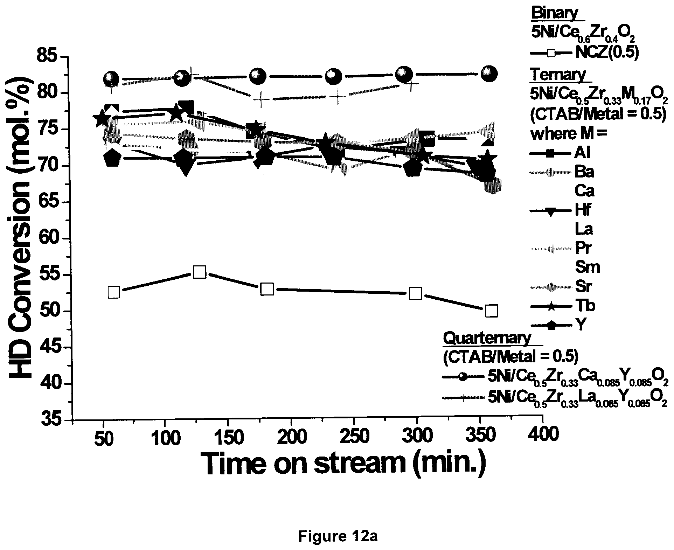

Figure 12a shows Catalytic Partial Oxidation of Hexadecane (CPOx $C_{16}H_{34}$) over $5Ni/Ce_{0.5}Zr_{0.33}M^1_{0.17}M^2_{0.0}O_2$ ($M^1$ = Al, Ba, Ca, Hf, La, Pr, Sm, Sr, Tb, & Y); $5Ni/Ce_{0.5}Zr_{0.33}Mr_{0.085}M^2_{0.085}O_2$($M^1$= Ca, or La; $^2$= Y) catalysts, where the supports were prepared with surfactant/metal molar ratio = 0.5, in certain examples of the present application. The $5Ni/Ce_{0.6}Zr_{0.4}O_2$ catalyst where the support was prepared with surfactant/metal molar ratio = 0.5 is also included for comparison purposes.

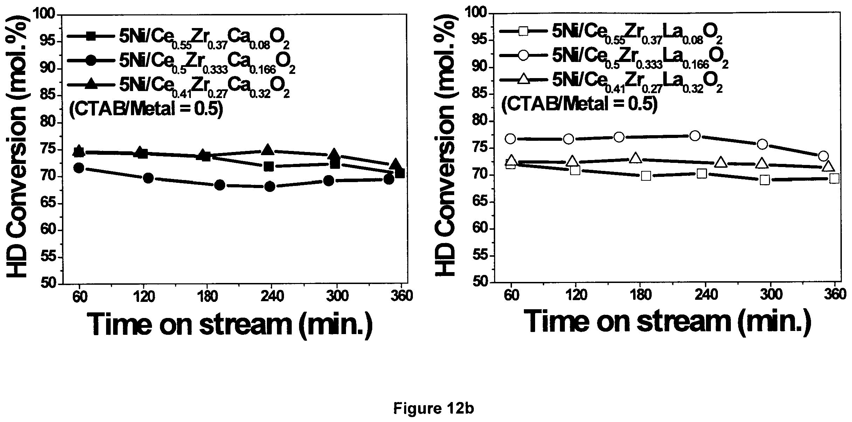

Figure 12b shows Catalytic Partial Oxidation of Hexadecane (CPOx $C_{16}H_{34}$) over $5Ni/Ce_{0.5}Zr_{0.33}M^1_{0.17}M^2_{0.0}O_2$; $5Ni/Ce_{0.55}Zr_{0.37}M^1_{0.08}M^2_{0.0}O_2$; $5Ni/Ce_{0.41}Zr_{0.27}M^1_{0.32}M^2_{0.0}O_2$ ($M^1$ = Ca & La); where the supports were prepared with surfactant/metal molar ratio = 0.5, in certain examples of the present application.

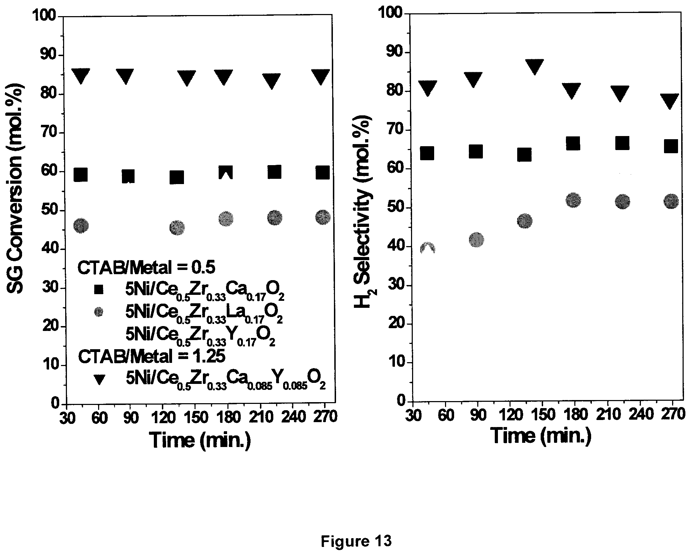

Figure 13 shows Catalytic Partial Oxidation of Synthetic Gasoline (CPOxSG) over $5Ni/Ce_{0.5}Zr_{0.33}M^1_{0.17}M^2_{0.0}O_2$ ($M^1$ = Ca, La, & Y) catalysts, where the supports were prepared with surfactant/metal molar ratio = 0.5; and over $5Ni/Ce_{0.5}Zr_{0.33}Ca_{0.085}Y_{0.085}O_2$ catalyst, where the support was prepared with surfactant/metal molar ratio = 1.25, in certain examples of the present application.

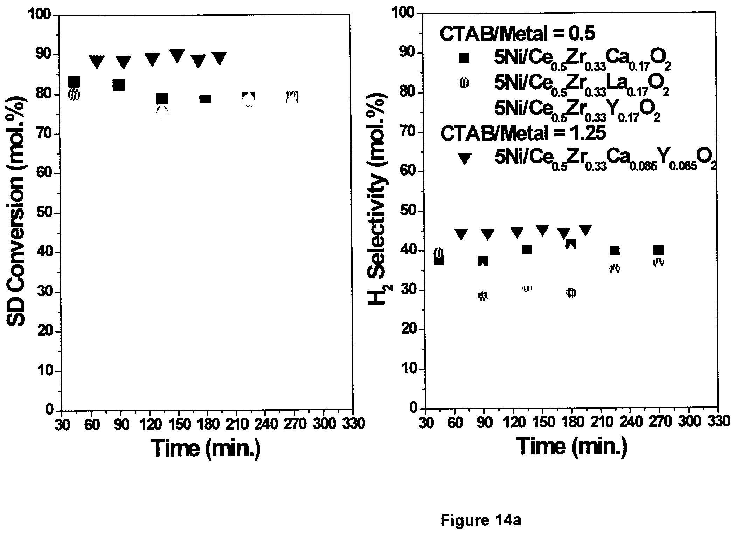

Figure 14a shows Catalytic Partial Oxidation of Synthetic Diesel (CPOx SD) over $5Ni/Ce_{0.5}Zr_{0.33}M^1_{0.17}M^2_{0.0}O_2$ ($M^1$ = Ca, La, & Y) catalysts, where the supports were prepared with surfactant/metal molar ratio = 0.5; and over $5Ni/Ce_{0.5}Zr_{0.33}Ca_{0.085}Y_{0.085}O_2$ catalyst, where the support was prepared with surfactant/metal molar ratio = 1.25, in certain examples of the present application.

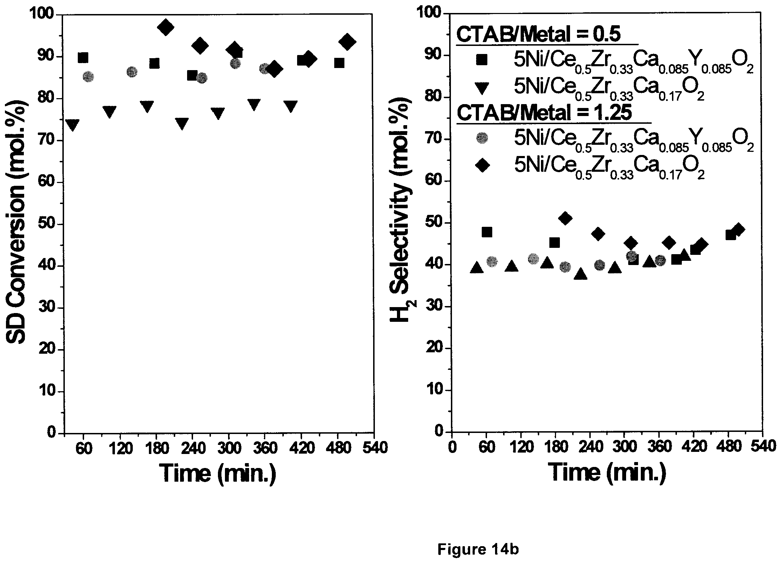

Figure 14b shows Catalytic Partial Oxidation of Synthetic Diesel (CPOx SD) over $5Ni/Ce_{0.5}Zr_{0.33}Ca_{0.17}O_2$ and $5Ni/Ce_{0.5}Zr_{0.33}Ca_{0.085}Y_{0.085}O_2$ catalysts, where the supports were prepared with surfactant/metal molar ratios = 0.5 & 1.25, in certain examples of the present application.

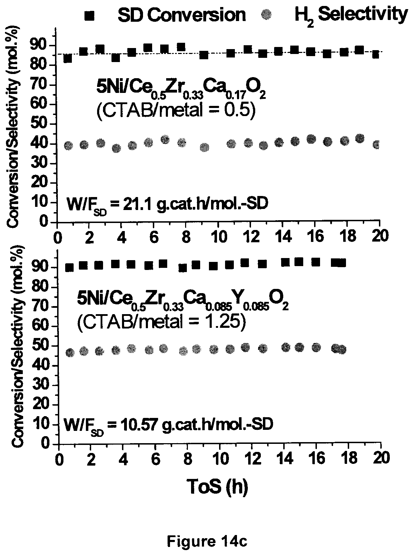

Figure 14c shows extended time-on-stream (ToS) stability studied for Catalytic Partial Oxidation of Synthetic Diesel (CPOx SD) over $5Ni/Ce_{0.5}Z_{r0.33}Ca_{0.17}O_2$ where the support were prepared with surfactant/metal molar ratio = 0.5 and over $5Ni/Ce_{0.5}Zr_{0.33}Ca_{0.085}Y_{0.085}O_2$catalyst, where the support was prepared with surfactant/metal molar ratio = 1.25, in certain examples of the present application.

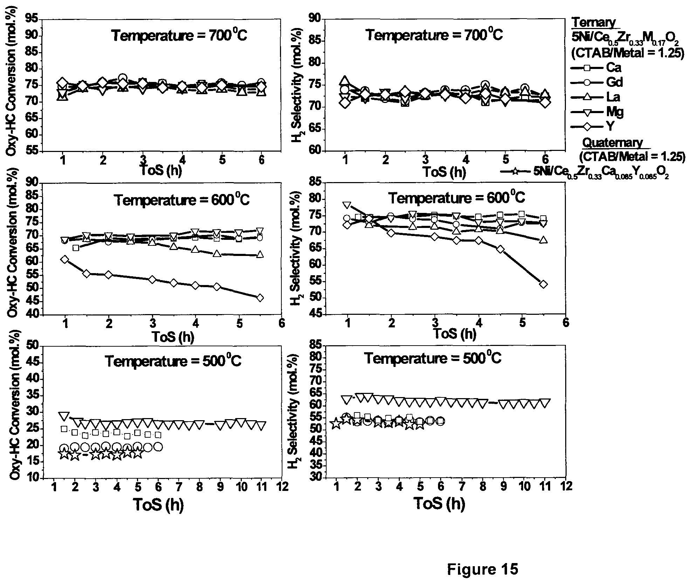

Figure 15 shows results of steam reforming of a mixture of oxygenated hydrocarbons (Oxy-HC) over $5Ni/Ce_{0.5}Zr_{0.33}M^1_{0.17}M^2_{0.0}O_2$ (M = Ca, Gd La, Mg, & Y) catalysts where the support was prepared with surfactant/metal molar ratio = 1.25 at different operating temperatures viz 700, 600, 500 °C (Feed Composition:$C_{28}H_{7.3}O_{1.9}$; Steam/Feed = 2; Feed flow rate = 0.1 cc min$^{-1}$; $W/F_{Oxy-HC}$ = 8.58 g cat. h/mol) in certain examples of the present application.

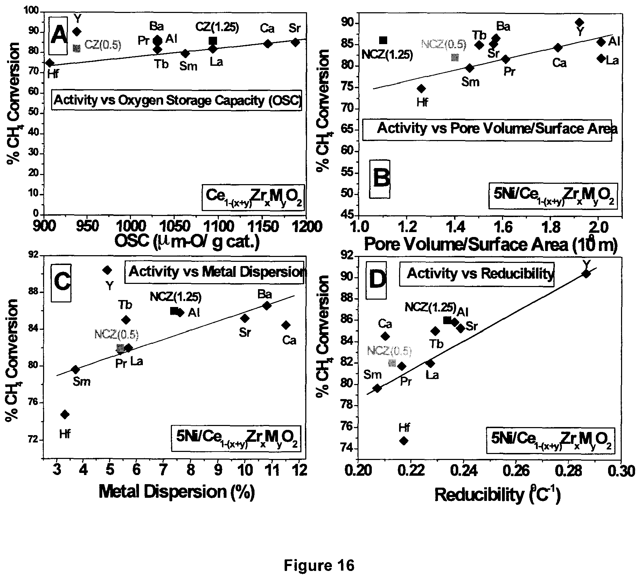

Figure 16 shows Structure-activity correlation plots pertaining to $CO_2$ reforming of $CH_4$ process; (A) Activity vs Oxygen Storage Capacity (OSC); (B) Activity vs Pore Volume/Surface Area; (C) Activity vs Metal Dispersion; and (D) Activity vs Reducibility, in certain examples of the present application.

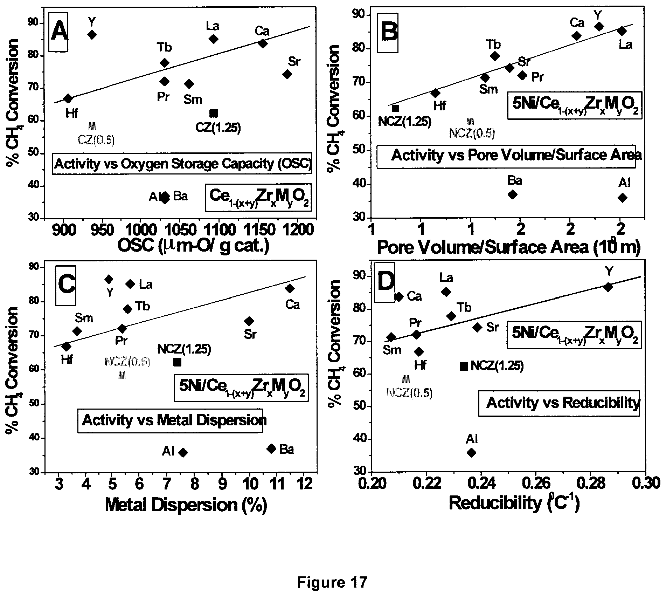

Figure 17 shows Structure-activity correlation plots pertaining to steam-assisted $CO_2$ reforming of $CH_4$ process; (A) Activity vs Oxygen Storage Capacity (OSC); (B) Activity vs Pore Volume/Surface Area; (C) Activity vs Metal Dispersion; and (D) Activity vs Reducibility, in certain examples of the present application.

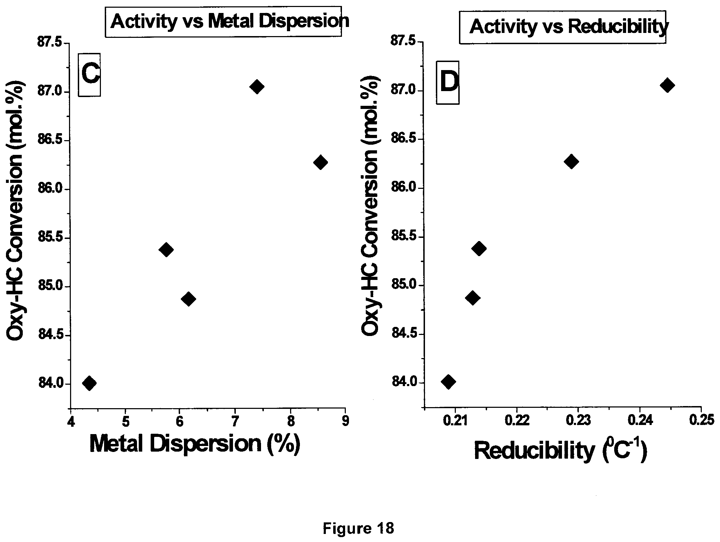

Figure 18 shows Structure-activity correlation plots pertaining to oxygenated hydrocarbon steam reforming process; (C) Activity vs Metal Dispersion; and (D) Activity vs Reducibility, in certain examples of the present application.

## Detailed description of the Application

### I. Definitions

Unless otherwise indicated, the definitions and embodiments described in this and other sections are intended to be applicable to all embodiments and aspects of the disclosure herein described for which they are suitable as would be understood by a person skilled in the art.

The term "metal oxide precursors" as used herein refers to any compound comprising the desired metal, $M^1$ or $M^2$, that is converted to a metal oxide under the conditions to form the supports and/or catalysts of the present application. Generally, the metal oxide precursors are salts of the desired metal, such as, but not limited to, nitrate salts, in any form.

The term "suitable" as used herein means that the selection of the particular compound or conditions would depend on the specific synthetic manipulation to be performed, and the identity of the molecule(s) to be transformed, but the selection would be well within the skill of a person trained in the art. All process steps described herein are to be conducted under conditions sufficient to provide the product shown. A person skilled in the art would understand that all reaction conditions, including, for example, reaction solvent, reaction time, reaction temperature, reaction pressure, reactant ratio and whether or not the reaction should be performed under an anhydrous or inert atmosphere, can be varied to optimize the yield of the desired product and it is within their skill to do so.

The terms "a," "an," or "the" as used herein not only include aspects with one member, but also includes aspects with more than one member. For example, an embodiment including "a metal" should be understood to present certain aspects with one metal or two or more additional different metals.

As used in this application, the singular forms "a", "an" and "the" include plural references unless the content clearly dictates otherwise. For example, an embodiment including "a catalyst" should be understood to present certain aspects with one catalyst, or two or more additional catalysts.

In embodiments comprising an "additional" or "second" component, such as an additional or second catalyst, the second component as used herein is chemically different from the other components or first component. A "third" component is different from the other, first, and second components, and further enumerated or "additional" components are similarly different.

In understanding the scope of the present disclosure, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. The term "consisting" and its derivatives, as used herein, are intended to be closed terms that specify the presence of the stated features, elements, components, groups, integers, and/or steps, but exclude the presence of other unstated features, elements, components, groups, integers and/or steps. The term "consisting essentially of", as used herein, is intended to specify the presence of the stated features, elements, components, groups, integers, and/or steps as well as those that do not materially affect the basic and novel characteristic(s) of features, elements, components, groups, integers, and/or steps.

Terms of degree such as "substantially", "about" and "approximately" as used herein mean a reasonable amount of deviation of the modified term such that the end result is not significantly changed. These terms of degree should be construed as including a deviation of at least ±5% of the modified term if this deviation would not negate the meaning of the term it modifies.

### II. Supports and Catalysts of the Application

A series of ternary oxide and quaternary catalysts were prepared and evaluated for various reforming processes. Representative examples of these catalysts were found to be active and stable for all the reforming processes verifying the "feedstock and process flexible" nature of these catalysts. Thus, feedstock- and process-flexible reforming catalysts for hydrogen and/or syngas production have been developed.

In an embodiment of the present application, a is about 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59 or 0.60.

In another embodiment of the present application, b is about 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40.

In another embodiment of the present application, c is about 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34 or 0.35, 0.36, 0.37, 0.38, 0.39 or 0.40.

In another embodiment of the present application, when d is 0, c is about 0.05, 0.055, 0.06, 0.065, 0.07, 0.075, 0.08, 0.085, 0.09, 0.095, 0.10, 0.105, 0.110, 0.115, 0.120, 0.125, 0.130, 0.135, 0.140, 0.145, 0.150, 0.155, 0.160, 0.165, 0.170, 0.175, 0.180, 0.185, 0.190, 0.195, 0.20, 0.21, 0.22, 0.23, 0.24, 0.25, 0.26, 0.27, 0.28, 0.29, 0.30, 0.31, 0.32, 0.33, 0.34 or 0.35, 0.36, 0.37, 0.38, 0.39 or 0.40.

In another embodiment of the present application, when d is greater than 0, c is about 0.05, 0.055, 0.060, 0.065, 0.070, 0.075, 0.080, 0.085, 0.090, 0.095, 0.100, 0.105, 0.110, 0.115, 0.120, 0.125, 0.130, 0.135, 0.140, 0.145, 0.150, 0.155, 0.160, 0.165, 0.170, 0.175, 0.180, 0.185, 0.190, 0.195 or 0.200.

In another embodiment d is about 0, 0.010, 0.015, 0.020, 0.025, 0.030, 0.035, 0.040, 0.045, 0.050, 0.055, 0.060, 0.065, 0.070, 0.075, 0.080, 0.085, 0.090, 0.095, 0.100, 0.105, 0.110, 0.115, 0.120, 0.125, 0.130, 0.135, 0.140, 0.145, 0.150, 0.155, 0.160, 0.165, 0.170, 0.175, 0.180, 0.185, 0.190, 0.195 or 0.200.

In a further embodiment, c and d are the same and are about 0.050, 0.055, 0.060, 0.065, 0.070, 0.075, 0.080, 0.085, 0.090, 0.095, 0.100, 0.105, 0.110, 0.115, 0.120, 0.125, 0.130, 0.135, 0.140, 0.145 or 0.150.

In an embodiment of the application, a is about 0.5, b is about 0.33, c is about 0.17 and d is 0.

In another embodiment of the application, a is about 0.55, b is about 0.37, c is about 0.08 and d is 0.

In another embodiment of the application, a is about 0.41, b is about 0.27, c is about 0.32 and d is 0.

In another embodiment of the application, a is about 0.5, b is about 0.33, c is about 0.085, and d is about 0.085.

In another embodiment of the application $M^1$ and $M^2$ are independently selected from the group consisting of Ca, La, Y, Gd and Mg.

In another embodiment of the application, when d is 0, $M^1$ is selected from the group consisting of Ca, La, Y, Gd and Mg.

In another embodiment of the application, when d is greater than 0, $M^1$ and $M^2$ are independently selected from the group consisting of Ca, La and Y, for example, in the following combinations CaY, LaY.

In an embodiment of the application, the catalyst supports of formula (I) comprise a cubic or pseudo cubic or tetragonal crystal lattice symmetry.

In an embodiment of the present application the catalyst support is prepared using a surfactant assisted method. That is, precursor salts of each of Ce, Zr, $M^1$ and $M^2$ (if present) oxides are dissolved in an aqueous solution and this solution is combined with an aqueous solution comprising an ionic surfactant. The resulting mixture is then treated with a base to form the support which precipitates from solution forming a slurry. The resulting slurry is hydrothermally aged for a suitable amount of time, then the precipitate is collected by any known means, such as filtration, and the resulting material is dried and calcined.

In an embodiment of the application the precursor salts of each of the Ce, Zr, $M^1$ and $M^2$ (if present) oxides are nitrate salts.

In an embodiment if the application, the solutions of metal oxide precursors and surfactant are combined and mixed at room temperature or at elevated temperatures, for example, at about 40 °C to about 80 °C. In embodiments of the application, the combined solution is mixed for about 30 to 130 minutes.

In an embodiment of the application, the base used in the surfactant assisted method is aqueous ammonia. More particularly, the pH of the combined solution is adjusted to about 11 to about 12 by the addition of the base. Optionally, the pH of the slurry may be readjusted by the addition of a base after step (iv) above.

In an embodiment of the application, the slurry is aged hydrothermally in a sealed vessel by heating to a temperature of about 80 to about 100 °C, suitably about 90 °C. Further, in an embodiment of the application, the slurry is aged for about 1 day to about 10 days, suitably, about 3 days to about 6 days. In another embodiment of the invention, the slurry is cooled prior to isolation of the support.

In an embodiment of the application, the precipitated support is separated from the slurry in step (v) above by filtration.

In an embodiment of the application the filtered supports are oven-dried and then calcined. For example, the supports are dried at about 100 °C to about 140 °C for about 6 hours to about 24 hours and then calcined at about 600 °C to about 700 °C for about 1 to about 5 hours. Suitably drying and calcination are carried out in air.

In the present invention the ionic surfactant is a cationic, anionic, amphoteric or zwitterionic surfactant. In one embodiment the ionic surfactant is a cationic surfactant. In a further embodiment, the molar ratio of surfactant to metal oxide precursors (surfactant/[Ce+Zr+$M^1$+$M^2$]) is about 0.4 to about 0.6. In a further embodiment, the molar ratio of surfactant to metal oxide precursors (surfactant/[Ce+Zr+$M^1$+$M^2$]) is about 0.6 to about 1.5.

In an embodiment of the application, the ionic surfactant is a cationic surfactant such as a tetraalkyl ammonium salt, in which the length of the alkyl group varies from C6 to C18, in which C6 represents an alkyl group containing six carbon atoms in the alkyl chain and C18 represents an alkyl group containing 18 carbon atoms in the alkyl chain. The alkyl chain is either straight or branched or optionally contains double or triple bonds. Suitably, the length of the alkyl group is C16, which is also known as cetyl or hexadecyl. In an embodiment of the application, the tetraalkylammonium salt is, for example, an alkyltrimethyl ammonium salt, such as an alkyltrimethyl ammonium chloride, bromide or hydroxide. In a further embodiment of the application, the tetraalkylammonium salt is cetyl trimethyl ammonium bromide (CTAB). In an embodiment of the application, the molar ratio of CTAB to metal oxide precursors (CTAB/[Ce+Zr+$M^1$+$M^2$]) is about 0.4 to about 0.6, suitably about 0.5. In an embodiment of the application, the molar ratio of CTAB to metal oxide precursors CTAB/[Ce+Zr+$M^1$+$M^2$]) is about 0.6 to about 1.5, suitably about 1.25.

In another embodiment of the application, the ionic surfactant is an anionic surfactant such as an alkyl sulfate salt (SDS), in which the length of the alkyl group varies from C6 to C18, in which C6 represents an alkyl group containing six carbon atoms in the alkyl chain and C18 represents an alkyl group containing 18 carbon atoms in the alkyl chain. The alkyl chain is either straight or branched or optionally contains double or triple bonds. Suitably, the length of the alkyl group is C12, which is also known as dodecyl. In an embodiment of the application, the alkyl sulfate salt is, for example, sodium dodecyl sulfate (SDS). In an embodiment of the application, the molar ratio of SDS to metal oxide precursors (SDS/[Ce+Zr+$M^1$+$M^2$]) is about 0.4 to about 0.6, suitably about 0.5. In an embodiment of the application, the molar ratio of SDS to metal oxide precursors (SDS/[Ce+Zr+$M^1$+$M^2$]) is about 0.6 to about 1.5, suitably about 1.25.

In a further embodiment the surfactant is an amphoteric surfactant such as cocamidopropyl betaine (CAPB). In an embodiment of the application, the molar ratio of CAPB to metal oxide precursors (CAPB/[Ce+Zr+$M^1$+$M^2$]) is about 0.4 to about 0.6, suitably about 0.5. In an embodiment of the application, the molar ratio of CAPB to metal oxide precursors (CAPB/[Ce+Zr+$M^1$+$M^2$]) is about 0.6 to about 1.5, suitably about 1.25.

In another embodiment of the application, the surfactant for preparing the support is oligomeric and includes co-polymers such as pluronics. These amphiphilic polymers comprise polypropylene oxide block (PO) which is surrounded by two hydrophilic polyethylene oxide blocks (EO). The general formula of the amphiphilic polymer is represented as $(EO)_a$ - $(PO)_b$ - $(EO)_c$. There are a number of different pluronics which are available, each with a different molecular weight and a EO/PO molar ratio. In a specific embodiment of the application, the triblock copolymer Pluronic$^{Tm}$ 123 (P-123) is used, which has the schematic structure of $(EO)_{20}$-$(PO)_{70}$-$(EO)_{20}$.

In an embodiment of the application, the catalyst support of formula (I) is selected from:

$$Ce_{0.5}Zr_{0.33}M^1_{0.17}M^2_{0.0}O_2,$$

wherein $M^1$ is selected from La, Al, Ba, Ca, Hf, Pr, Sm, Sr, Tb, Gd, Mg and Y;

$$Ce_{0.55}Zr_{0.37}M^10.08M^2_{0.0}O_2,$$

wherein $M^1$ is selected from La and Ca; and

$$Ce_{0.41}Zr_{0.27}M^1_{0.32}M^2_{0.0}O_2,$$

wherein $M^1$ is selected from La and Ca;

In a further embodiment, the support is prepared using a surfactant assisted method where the molar ratio of the surfactant to metal oxide precursors is about 0.4 to about 0.6, or about 0.5 or is about 0.6 to about 1.5, or about 1.25.

In another embodiment, the catalyst support of formula (I) is selected from:

$$Ce_{0.5}Zr_{0.33}M^1_{0.085}M^2_{0.085}O_2,$$

wherein $M^1$ is selected from Ca, or La ; and $M^2$ is selected from Y;

In a further embodiment, the support for the above catalysts is prepared using a surfactant assisted method where the molar ratio of the surfactant to metal oxide precursors is about 0.4 to about 0.6, or about 0.5 or is about 0.6 to about 1.5, or about 1.25.

In an embodiment of the application, Y% is about 1 to about 8, about 2 to about 7, about 3 to 6 or about 5. In another embodiment Y% is about 5. The value Y%, is the percent, by weight of the catalyst, of nickel present in the catalyst of formula (II).

The $Ce_aZr_bM^1_cM^2_dO_2$ in the catalysts of formula (II) is the support of formula (I) as defined above and prepared using the surfactant assisted method, also described above. Accordingly, the embodiments for the values of a, b, c, d, $M^1$ and $M^2$ in the formula (II) are as defined above.

In an embodiment of the application, the catalyst of formula (II) is selected from:

$$5\%Ni/Ce_{0.5}Zr_{0.33}M^1_{0.17}M^2_{0.0}O_2,$$

wherein $M^1$ is selected from La, Al, Ba, Ca, Hf, Pr, Sm, Sr, Tb, Gd, Mg and Y;

$$5\% Ni/Ce_{0.55}Zr_{0.37}M^1_{0.08}M^2_{0.0}O_2,$$

wherein $M^1$ is selected from La and Ca; and

$$5\% Ni/Ce_{0.41}Zr_{0.27}M^1_{0.32}M^2_{0.0}O_2,$$

wherein $M^1$ is selected from La and Ca;
In a further embodiment, the support for the above catalysts is prepared using a surfactant assisted method where the molar ratio of the surfactant to metal oxide precursors is about 0.4 to about 0.6, or about 0.5 or is about 0.6 to about 1.5, or about 1.25.

In another embodiment, the catalyst of formula (II) is selected from:

$$5\%Ni/Ce_{0.5}Zr_{0.33}M^1_{0.085}M^2_{0.05}O_2,$$

wherein $M^1$ is selected from Ca, & La; and $M^2$ is selected from Y;
In a further embodiment, the support for the above catalysts is prepared using a surfactant assisted method where the molar ratio of the surfactant to metal oxide precursors is about 0.4 to about 0.6, or about 0.5 or is about 0.6 to about 1.5, or about 1.25.

In an embodiment of the application, the Ni is added to the support using a wet impregnation method. For example the supports of formula (I) are immersed in an aqueous solution of a Ni salt, such as $Ni(NO_3)_2$ and the resulting mixture stirred and slowly heated under conditions, for example in a hot water bath, to remove excess water (i.e. dried). In an embodiment, the dried catalysts are calcined, for example, at about 600 °C to about 700 °C for about 1 to about 5 hours. Suitably drying and calcined are carried out in air.

## III. Processes of the Application

In an embodiment of the application the catalysts of the formula (II) are reduced *in situ* during the course of the process to reduce the NiO species to metallic Ni species. In a further embodiment, the conditions to reduce NiO to metallic Ni to provide a reduced catalyst comprise a temperature of about 700 °C, in flowing $H_2$ (about 1% to about 10%, for example about 5%, with the balance being $N_2$).

The fuel-based feedstock is, for example, but not limited to short chain, medium chain and long chain hydrocarbons (e.g., natural gas, gasoline, diesel), oxygenated hydrocarbons and their mixtures (e.g. glycerol, ethanol, biomass derived fuels) or biogas.

The conditions for the conversion of the reactant comprising fuel-based feedstock to product comprising $H_2$ are any known reforming processes for these feedstocks, including, but not limited to $CO_2$ reforming of methane and other hydrocarbons, partial oxidation of gasoline, partial oxidation of diesel, partial oxidation of other hydrocarbons and their mixtures, autothermal reforming of diesel and other hydrocarbons, steam assisted $CO_2$ reforming of methane and other hydrocarbons or their mixtures, steam reforming of methane or other hydrocarbons and their mixtures, gas phase steam reforming of oxygenated hydrocarbons and their mixtures, as well as a combination of these reforming processes.

In an embodiment, the reactant further comprises other reactants for performing the reforming reaction on the fuel-based feedstock to produce a product comprising hydrogen.

In an embodiment of the reaction, the product comprising hydrogen further comprises carbon dioxide, carbon monoxide and/or water. When the product comprises hydrogen and carbon monoxide, this mixture is known as syngas.

In an embodiment of the application, the reforming reaction is dry reforming of methane or other hydrocarbons and the reactant comprises the hydrocarbon(s) and carbon dioxide ($CO_2$) and the conditions for the conversion of the fuel-based feedstock into a product comprising hydrogen comprise a temperature of about 700°C to about 900 °C at a pressure of 1 atm. In an embodiment, the molar ratio of hydrocarbon(s) to $CO_2$ is about 1:1, in another embodiment, the molar ration of hydrocarbon(s) to $CO_2$ is about 1.25:1.

In an embodiment of the application, the reforming reaction is steam reforming of methane or other hydrocarbons and the reactant comprises the hydrocarbon(s), carbon dioxide and water and the conditions for the conversion of the fuel-based feedstock into a product comprising hydrogen comprise a temperature of about 700°C to about 900 °C at a pressure of 1 atm. In an embodiment, the molar ratio of hydrocarbon(s) to $CO_2$ to water is about 1:1:1.

In an embodiment of the application, the reforming reaction is partial oxidation of hexadecane or other hydrocarbons and the reactant comprises the hydrocarbon(s) and oxygen and the conditions for the conversion of the fuel-based feedstock into a product comprising hydrogen comprise a temperature of about 750°C to about 950 °C at a pressure of 1 atm. In an embodiment, the molar ratio of $O_2/C$ (where C is the total moles of carbon in the hydrocarbon) is about 0.5.

In an embodiment of the application, the reforming reaction is partial oxidation of synthetic gasoline and the reactant comprises the gasoline and oxygen and the conditions for the conversion of the fuel-based feedstock into a product comprising hydrogen comprise a temperature of about 750°C to about 950 °C at a pressure of 1 atm. In an embodiment, the molar ratio of $O_2/C$ is about 0.5.

In an embodiment of the application, the reforming reaction is partial oxidation of synthetic diesel and the reactant comprises the diesel and oxygen and the conditions for the conversion of the fuel-based feedstock into a product comprising hydrogen comprise a temperature of about 750°C to about 950 °C at a pressure of 1 atm. In an embodiment, the molar ratio of $O_2/C$ is about 0.75.

In an embodiment of the application, the reforming reaction is steam reforming of a liquid mixture of oxygenated hydrocarbons and the reactant comprises the liquid mixture, and water and the conditions for the conversion of the fuel-based feedstock into a product comprising hydrogen comprise a temperature of about 500°C to about 700 °C at a pressure of 1 atm. In an embodiment, the amount of water needed is calculated based on the stoichiometry required for reaction with the specific oxygenated hydrocarbons in the mixture. In another embodiment, two times the amount of water needed for the stoichiometric reaction with the specific oxygenated hydrocarbons in the mixture was used.

In an embodiment, the catalysts of formula (II) are mixed with an inert diluent, for example, but not limited to, $\alpha$-$Al_2O_3$.

In an embodiment of the application, the process is performed as a continuous process where the reactant comprising fuel-based feedstock is in the form of a gaseous, liquid or vaporized input stream and the hydrogen product is comprised in an output stream that is optionally treated using known methods to separate and purify the hydrogen gas for use as a fuel or any other known purpose (such as a reactant in chemical synthesis). In this embodiment, the catalyst is packed or housed in a packed bed tubular reactor (PBTR) and the input stream is passed through the PBTR.

The following non-limiting examples are illustrative of the present application:

**V. Examples**

**Catalyst Preparation**

**Example 1: Preparation of Ternary & Quaternary Mixed Oxide Supports:**

The synthetic route employed in the study, is based on a modification of a 'surfactant assisted route' used by Idem et al. [2006] for binary oxide supports [21], wherein nitrate salts of different metal ions were hydrolyzed together along with a surfactant (CTAB) under basic conditions, and subsequently aged hydrothermally under autogenous pressure at 90 °C for 60 h. The CTAB/[Ce+Zr] ratio of 1.25 was used in the previous report [21]. In most of the current work, the surfactant (CTAB) usage is significantly reduced by a factor of 2.5 for the purpose of minimizing wastes generated during catalyst making. This represents a much improved and optimized version of the previous recipe [21]. Binary oxide supports ($Ce_{0.6}Zr_{0.4}O_2$) with CTAB/[Ce+Zr] molar ratios 0.5 and 1.25 were also prepared in the current study for comparison purposes. The two binary oxide supports prepared using two different CTAB/[Ce+Zr] ratios are abbreviated as CZ(1.25) and CZ(0.5) respectively. The third oxide in the ternary oxide support system (I) was used because the binary system, irrespective of CTAB/[Ce+Zr] ratio was unable to support the feed flexibility and process flexibility envisaged in the present application. The third and fourth oxides in the quarternary oxide support system (II) was used because the binary system, irrespective of CTAB/[Ce+Zr] ratio was unable to support the feed flexibility and process flexibility envisaged in the present application. A comparative analysis of their (binary oxides vs ternary oxides and quarternary oxides) relative performance and inherent structural/physico-chemical characteristics sheds light on the scientific basis for the superior behavior of ternary oxide and quarternary oxide catalysts over their binary oxide counterparts. All the preparations described below are normalized to yield 15 g catalysts per batch/preparation. The nominal compositions achieved in the ternary oxide supports were $Ce_{0.5}Zr_{0.33}M^1_{0.17}M^2_{0.0}O_2$ (where $M^1$ = Al, Ba, Ca, Hf, La, Pr, Sm, Sr, Tb, & Y); $Ce_{0.55}Zr_{0.37}M^1_{0.08}M^2_{0.0}O_2$ (where $M^1$ = Ca, & La); $Ce_{0.41}Zr_{0.27}M^1_{0.32}M^2_{0.0}O_2$ (where $M^1$ = Ca, & La) with a CTAB/[Ce+Zr+$M^1$+$M^2$] molar ratio ~0.5 and $Ce_{0.5}Zr_{0.33}M^1_{0.17}M^2_{0.0}O_2$ (where $M^1$ = Ca, Gd, La, Mg, & Y) with a CTAB/[Ce+Zr+$M^1$+$M^2$] molar ratio ~1.25. The nominal compositions achieved in the quarternary oxide supports were $Ce_{0.5}Zr_{0.33}M^1_{0.085}M^2_{0.085}O_2$ ($M^1$ = Ca or La; $M^2$ = Y) with a CTAB/[Ce+Zr+$M^1$+$M^2$] molar ratio ~0.5 and $Ce_{0.5}Zr_{0.33}M^1_{0.085}M^2_{0.085}O_2$ ($M^1$ = Ca; $M^2$ = Y) with a CTAB/[Ce+Zr+$M^1$+$M^2$] molar ratio ~1.25. It is notable that all catalysts reported herein were prepared by analogous procedures, which was necessary to allow direct comparison of their catalytic properties.

## a. Preparation of $Ce_{0.5}Zr_{0.33}Al_{0.17}O_2$ catalyst support

The $Ce_{0.5}Zr_{0.33}Al_{0.17}O_2$ ternary metal oxide support was prepared by "surfactant assisted route" under basic conditions. Cerium (III) nitrate hexahydrate [$Ce(NO_3)_3.6H_2O$]; Zirconium oxynitrate [$ZrO(NO_3)_2.xH_2O$]; and Aluminum nitrate nonahydrate [$Al(NO_3)_3.9H_2O$] precursors were employed as a source of $Ce^{3+/4+}$, $Zr^{4+}$, and $Al^{3+}$ cations to prepare the above catalyst. In a typical preparation, 22.8 g of $Ce(NO_3)_3.6H_2O$, 8.0 g of $ZrO(NO_3)_2.xH_2O$ and 6.3 g of $Al(NO_3)_3.9H_2O$, were dissolved separately in deionized water and mixed together. In a separate beaker, 18.8 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Al] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Al^{3+}$ was achieved through the current preparation route.

## b. Preparation of $Ce_{0.5}Zr_{0.33}Ba_{0.17}O_2$ catalyst support

The $Ce_{0.5}Zr_{0.33}Ba_{0.17}O_2$ ternary metal oxide support was prepared by "surfactant assisted route" under basic conditions. Cerium (III) nitrate hexahydrate [$Ce(NO_3)_3.6H_2O$]; Zirconium oxynitrate [$ZrO(NO_3)_2.xH_2O$]; and Barium nitrate [$Ba(NO_3)_2$] precursors were employed as a source of $Ce^{3+/4+}$, $Zr^{4+}$, and $Ba^{2+}$ cations to prepare the above catalyst. In a typical preparation, 21.5 g of $Ce(NO_3)_3.6H_2O$, 7.6 g of $ZrO(NO_3)_2.xH_2O$ and 4.14 g of $Ba(NO_3)_2$, were dissolved separately in deionized water and mixed together. In a separate beaker, 18.0 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Ba] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Ba^{2+}$ was achieved through the current preparation route.

## c. Preparation of $Ce_{0.5}Zr_{0.33}Ca_{0.17}O_2$, $Ce_{0.55}Zr_{0.37}Ca_{0.08}O_2$, $Ce_{0.41}Zr_{0.27}Ca_{0.32}O_2$ catalyst supports

The $Ce_{0.5}Zr_{0.33}Ca_{0.17}O_2$ ternary metal oxide support was prepared by "surfactant assisted route" under basic conditions. Cerium (III) nitrate hexahydrate [$Ce(NO_3)_3.6H_2O$]; Zirconium oxynitrate [$ZrO(NO_3)_2.xH_2O$]; and Calcium nitrate tetrahydrate [$Ca(NO_3)_2.4H_2O$] precursors were employed as a source of $Ce^{3+/4+}$, $Zr^{4+}$, and $Ca^{2+}$ cations to prepare the above catalyst. In a typical preparation, 23.9 g of $Ce(NO_3)_3.6H_2O$, 8.5 g of $ZrO(NO_3)_2.xH_2O$ and 4.34 g of $Ca(NO_3)_2.4H_2O$, were dissolved separately in deionized water and mixed together. In a separate beaker, 20.0 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Ca] was kept constant at ≅0.5. In order to prepare [CTAB]/[Ce+Zr+Ca] = 1.25, 50 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Ca^{2+}$ was achieved through the current preparation route.

The $Ce_{0.55}Zr_{0.37}Ca_{0.08}O_2$ ternary metal oxide support was prepared by "surfactant assisted route" under basic conditions. Cerium (III) nitrate hexahydrate [$Ce(NO_3)_3.6H_2O$]; Zirconium oxynitrate [$ZrO(NO_3)_2.xH_2O$]; and Calcium nitrate tetrahydrate [$Ca(NO_3)_2.4H_2O$] precursors were employed as a source of $Ce^{3+/4+}$, $Zr^{4+}$, and $Ca^{2+}$ cations to prepare the above catalyst. In a typical preparation, 24.7 g of $Ce(NO_3)_3.6H_2O$, 8.9 g of $ZrO(NO_3)_2.xH_2O$ and 2.0 g of $Ca(NO_3)_2.4H_2O$, were dissolved separately in deionized water and mixed together. In a separate beaker, 18.8 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Ca] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Ca^{2+}$ was achieved through the current preparation route.

The $Ce_{0.41}Zr_{0.27}Ca_{0.32}O_2$ ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Calcium nitrate tetrahydrate $[Ca(NO_3)_2.4H_2O]$ precursors were employed as a source of $Ce^{3+/4+}$, $Zr^{4+}$, and $Ca^{2+}$ cations to prepare the above catalyst. In a typical preparation, 21.9 g of $Ce(NO_3)_3.6H_2O$, 7.7 g of $ZrO(NO_3)_2.xH_2O$ and 9.3 g of $Ca(NO_3)_2.4H_2O$, were dissolved separately in deionized water and mixed together. In a separate beaker, 22.4 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Ca] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Ca^{2+}$ was achieved through the current preparation route.

### d. Preparation of $Ce_{0.5}Zr_{0.33}Gd_{0.17}O_2$ catalyst support

The **$Ce_{0.5}Zr_{0.33}Gd_{0.17}O_2$** ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Gadolinium nitrate hexahydrate $[Gd(NO_3)_3.6H_2O]$ precursors were employed as a source of $Ce^{3+/4+}$, $Zr^{4+}$, and $Gd^{3+}$ cations to prepare the above catalyst. In a typical preparation, 20.8 g of $Ce(NO_3)_3.6H_2O$, 7.3 g of $ZrO(NO_3)_2.xH_2O$ and 5.45 g of $Gd(NO_3)_3.2H_2O$, were dissolved separately in deionized water and mixed together. In a separate beaker, 17.35 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Gd] was kept constant at ≅0.5. In order to prepare [CTAB]/[Ce+Zr+Gd] = 1.25, 43.4 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Gd^{3+}$ was achieved through the current preparation route.

### e. Preparation of $Ce_{0.5}Zr_{0.33}Hf_{0.17}O_2$ catalyst support

The **$Ce_{0.5}Zr_{0.33}Hf_{0.17}O_2$** ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Hafnium oxynitrate $[HfO(NO_3)_2.xH_2O]$ precursors were employed as a source of $Ce^{3+/4+}$, $Zr^{4+}$, and $Hf^{4+}$ cations to prepare the above catalyst. In a typical preparation, 20.1 g of $Ce(NO_3)_3.6H_2O$, 7.1 g of $ZrO(NO_3)_2.xH_2O$ and 9.11 ml of $HfO(NO_3)_2$ solution, were dissolved separately in deionized water and mixed together. In a separate beaker, 16.8 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Hf] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Hf^{4+}$ was achieved through the current preparation route.

**f. Preparation of $Ce_{0.5}Zr_{0.33}La_{0.17}O_2$, $Ce_{0.5}Zr_{0.37}La_{0.08}O_2$, $Ce_{0.41}Zr_{0.27}La_{0.32}O_2$ catalyst supports**

The $Ce_{0.5}Zr_{0.33}La_{0.17}O_2$ ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Lanthanum nitrate hexahydrate $[La(NO_3)_3.6H_2O]$ precursors were employed as a source of $Ce^{3+/4+}$, $Zr^{4+}$, and $La^{3+}$ cations to prepare the above catalyst. In a typical preparation, 21.1 g of $Ce(NO_3)_3.6H_2O$, 7.5 g of $ZrO(NO_3)_2.xH_2O$ and 7.0 g of $La(NO_3)_3.6H_2O$, were dissolved separately in deionized water and mixed together. In a separate beaker, 17.7 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+La] was kept constant at ≅0.5. In order to prepare [CTAB]/[Ce+Zr+La] = 1.25, 44.25 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $La^{3+}$ was achieved through the current preparation route.

The $Ce_{0.55}Zr_{0.37}La_{0.08}O_2$ ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Lanthanum nitrate hexahydrate $[La(NO_3)_3.6H_2O]$ precursors were employed as a source of $Ce^{3+/4+}$, $Zr^{4+}$, and $La^{3+}$ cations to prepare the above catalyst. In a typical preparation, 23.4 g of $Ce(NO_3)_3.6H_2O$, 8.4 g of $ZrO(NO_3)_2.xH_2O$ and 3.4 g of $La(NO_3)_3.6H_2O$, were dissolved separately in deionized water and mixed together. In a separate beaker, 17.8 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+La] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $La^{3+}$ was achieved through the current preparation route.

The $Ce_{0.41}Zr_{0.27}La_{0.32}O_2$ ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Lanthanum nitrate hexahydrate $[La(NO_3)_3.6H_2O]$ precursors were employed as a source of $Ce^{3+/4+}$, $Zr^{4+}$, and $La^{3+}$ cations to prepare the above catalyst. In a typical preparation, 17.15 g of $Ce(NO_3)_3.6H_2O$, 6.0 g of $ZrO(NO_3)_2.xH_2O$ and 7.0 g of $La(NO_3)_3.6H_2O$, were dissolved separately in deionized water and mixed together. In a separate beaker, 13.4 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+La] was kept constant at ≅0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $La^{3+}$ was achieved through the current preparation route.

**g. Preparation of $Ce_{0.5}Zr_{0.33}Mg_{0.17}O_2$ catalyst support**

The $Ce_{0.5}Zr_{0.33}Mg_{0.17}O_2$ ternary metal oxide support was prepared by "surfactant assisted route" under basic conditions. Cerium (III) nitrate hexahydrate $[Ce(NO_3)_3.6H_2O]$; Zirconium oxynitrate $[ZrO(NO_3)_2.xH_2O]$; and Magnesium nitrate hexahydrate $[Mg(NO_3)_2.6H_2O]$ precursors were employed as a source of $Ce^{3+/4+}$, $Zr^{4+}$, and $Mg^{2+}$ cations to prepare the above catalyst. In a typical preparation, 24.7 g of $Ce(NO_3)_3.6H_2O$, 9.3 g of $ZrO(NO_3)_2.xH_2O$ and 4.6 g of $Mg(NO_3)_2.6H_2O$, were dissolved separately in deionized water and mixed together. In a separate beaker, 20.3 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Mg] was kept constant at ≅0.5. In order to prepare [CTAB]/[Ce+Zr+Mg] = 1.25, 50.8 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Mg^{2+}$ was achieved through the current preparation route.

### h. Preparation of $Ce_{0.5}Zr_{0.33}Pr_{0.17}O_2$ catalyst support

The $Ce_{0.5}Zr_{0.33}Pr_{0.17}O_2$ ternary metal oxide support was prepared by "surfactant assisted route" under basic conditions. Cerium (III) nitrate hexahydrate $[Ce(N0_3)_3.6H_20]$; Zirconium oxynitrate $[ZrO(NO_3)_2.xH_20]$; and Preseodymium nitrate hexahydrate $[Pr(NO_3)_3.6H_20]$ precursors were employed as a source of $Ce^{3+/4+}$, $Zr^{4+}$, and $Pr^{3+}$ cations to prepare the above catalyst. In a typical preparation, 21.1 g of $Ce(NO_3)_3.6H_20$, 7.5 g of $ZrO(NO_3)_2.xH_20$ and 7.0 g of $Pr(NO_3)_3.6H_20$, were dissolved separately in deionized water and mixed together. In a separate beaker, 17.7 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Pr] was kept constant at $\cong 0.5$. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Pr^{3+}$ was achieved through the current preparation route.

### i. Preparation of $Ce_{0.5}Zr_{0.33}Sm_{0.17}O_2$ catalyst support

The $Ce_{0.5}Zr_{0.33}Sm_{0.17}O_2$ ternary metal oxide support was prepared by "surfactant assisted route" under basic conditions. Cerium (III) nitrate hexahydrate $[Ce(N0_3)_3.6H_20]$; Zirconium oxynitrate $[ZrO(NO_3)_2.xH_20]$; and Samarium nitrate hexahydrate $[Sm(NO_3)_3.6H_20]$ precursors were employed as a source of $Ce^{3+/4+}$, $Zr^{4+}$, and $Sm^{3+}$ cations to prepare the above catalyst. In a typical preparation, 20.85 g of $Ce(NO_3)_3.6H_20$, 7.35 g of $ZrO(NO_3)_2.xH_20$ and 7.05 g of $Sm(NO_3)_3.6H_20$, were dissolved separately in deionized water and mixed together. In a separate beaker, 17.5 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Sm] was kept constant at $\cong 0.5$. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Sm^{3+}$ was achieved through the current preparation route.

### j. Preparation of $Ce_{0.5}Zr_{0.33}Sm_{0.17}O_2$ catalyst support

The $Ce_{0.5}Zr_{0.33}Sr_{0.17}O_2$ ternary metal oxide support was prepared by "surfactant assisted route" under basic conditions. Cerium (III) nitrate hexahydrate $[Ce(N0_3)_3.6H_20]$; Zirconium oxynitrate $[ZrO(NO_3)_2.xH_20]$; and Strontium nitrate $[Sr(NO_3)_2]$ precursors were employed as a source of $Ce^{3+/4+}$, $Zr^{4+}$, and $Sr^{2+}$ cations to prepare the above catalyst. In a typical preparation, 22.8 g of $Ce(NO_3)_3.6H_20$, 8.0 g of $ZrO(NO_3)_2.xH_20$ and 3.555 g of $Sr(NO_3)_2$, were dissolved separately in deionized water and mixed together. In a separate beaker, 18.8 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Sr] was kept constant at $\cong 0.5$. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged *"hydrothermally"* in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, & $Sr^{2+}$ was achieved through the current preparation route.

**k. Preparation of Ce$_{0.5}$Zr$_{0.33}$Sm$_{0.17}$O$_2$ catalyst support**

The **Ce$_{0.5}$Zr$_{0.33}$Tb$_{0.17}$O$_2$** ternary metal oxide support was prepared by "surfactant assisted route" under basic conditions. Cerium (III) nitrate hexahydrate [Ce(NO$_3$)$_3$.6H$_2$0]; Zirconium oxynitrate [ZrO(NO$_3$)$_2$.xH$_2$0]; and Terbium nitrate hexahydrate [Tb(NO$_3$)$_3$.6H$_2$0] precursors were employed as a source of Ce$^{3+/4+}$, Zr$^{4+}$, and Tb$^{3+}$ cations to prepare the above catalyst. In a typical preparation, 20.6 g of Ce(NO$_3$)$_3$.6H$_2$0, 7.3 g of ZrO(NO$_3$)$_2$.xH$_2$0 and 5.43 g of Tb(NO$_3$)$_3$.6H$_2$0, were dissolved separately in deionized water and mixed together. In a separate beaker, 17.5 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Tb] was kept constant at $\cong$0.5. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged "hydrothermally" in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between Ce$^{4+/3+}$, Zr$^{4+}$, & Tb$^{3+}$ was achieved through the current preparation route.

**l. Preparation of Ce$_{0.5}$Zr$_{0.33}$Sm$_{0.17}$O$_2$ catalyst support**

The Ce$_{0.5}$Zr$_{0.33}$Y$_{0.17}$O$_2$ ternary metal oxide support was prepared by "surfactant assisted route" under basic conditions. Cerium (III) nitrate hexahydrate [Ce(N0$_3$)$_3$.6H$_2$0]; Zirconium oxynitrate [ZrO(NO$_3$)$_2$.xH$_2$0];and Yttrium nitrate hexahydrate [Y(NO$_3$)$_3$.6H$_2$0] precursors were employed as a source of Ce$^{3+/4+}$, Zr$^{4+}$, and Y$^{3+}$ cations to prepare the above catalyst. In a typical preparation, 22.3 g of Ce(NO$_3$)$_3$.6H$_2$0, 7.9 g of ZrO(NO$_3$)$_2$.xH$_2$0 and 6.54 g of Y(NO$_3$)$_3$.6H$_2$0, were dissolved separately in deionized water and mixed together. In a separate beaker, 18.7 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Y] was kept constant at $\cong$0.5. In order to prepare [CTAB]/[Ce+Zr+Y] = 1.25, 46.75 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged *"hydrothermally"* in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between Ce$^{4+/3+}$, Zr$^{4+}$, & Y$^{3+}$ was achieved through the current preparation route.

**m. Preparation of Ce$_{0.5}$Zr$_{0.33}$Ca$_{0.085}$Y$_{0.085}$O$_2$ catalyst support**

The Ce$_{0.5}$Zr$_{0.33}$Ca$_{0.085}$Y$_{0.085}$O$_2$ quarternary metal oxide support was prepared by "surfactant assisted route" under basic conditions. Cerium (III) nitrate hexahydrate [Ce(NO$_3$)$_3$.6H$_2$0]; Zirconium oxynitrate [ZrO(NO$_3$)$_2$.xH$_2$0]; Calcium nitrate tetrahydrate [Ca(NO$_3$)$_2$.4H$_2$0]; and Yttrium nitrate hexahydrate [Y(NO$_3$)$_3$.6H$_2$0] precursors were employed as a source of Ce$^{3+/4+}$, Zr$^{4+}$, Ca$^{2+}$ and Y$^{3+}$ cations to prepare the above catalyst. In a typical preparation, 23.2 g of Ce(NO$_3$)$_3$.6H$_2$0, 8.2 g of ZrO(NO$_3$)$_2$.xH$_2$0, 2.0 g Ca(NO$_3$)$_2$.4H$_2$0 and 3.3 g of Y(NO$_3$)$_3$.6H$_2$0, were dissolved separately in deionized water and mixed together. In a separate beaker, 19.5 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+Ca+Y] was kept constant at $\cong$0.5. In order to prepare [CTAB]/[Ce+Zr+Ca+Y] = 1.25, 48.75 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged *"hydrothermally"* in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between Ce$^{4+/3+}$, Zr$^{4+}$, Ca$^{2+}$& Y$^{3+}$ was achieved through the current preparation route.

**n. Preparation of Ce$_{0.5}$Zr$_{0.33}$La$_{0.085}$Y$_{0.085}$O$_2$ catalyst support**

The Ce$_{0.5}$Zr$_{0.33}$La$_{0.085}$Y$_{0.085}$O$_2$ quarternary metal oxide support was prepared by "surfactant assisted route" under basic conditions. Cerium (III) nitrate hexahydrate [Ce(NO$_3$)$_3$.6H$_2$0] Zirconium oxynitrate [ZrO(NO$_3$)$_2$.xH$_2$0];Lanthanum nitrate hexahydrate [La(NO$_3$)$_3$.6H$_2$0]; and Yttrium nitrate hexahydrate [Y(NO$_3$)$_3$.6H$_2$0] precursors were employed

as a source of $Ce^{3+/4+}$, $Zr^{4+}$, $La^{3+}$ and $Y^{3+}$ cations to prepare the above catalyst. In a typical preparation, 21.9 g of $Ce(NO_3)_3.6H_2O$, 7.7 g of $ZrO(NO_3)_2.xH_2O$, 3.5 g $La(NO_3)_3.6H_2O$ and 3.1 g of $Y(NO_3)_3.6H_2O$, were dissolved separately in deionized water and mixed together. In a separate beaker, 18.3 g of surfactant - cetyl trimethylammonium bromide (CTAB) was dissolved in DI water at 60 °C. The above two solutions were mixed together to obtain a resultant mixture solution. The molar ratio of [CTAB]/[Ce+Zr+La+Y] was kept constant at $\cong 0.5$. In order to prepare [CTAB]/[Ce+Zr+La+Y] = 1.25, 45.75 g of surfactant - CTAB was used. Aqueous ammonia (25 vol.%) was gradually added to the aforementioned mixture solutions under vigorous stirring until precipitation was complete (pH 11.8). The addition of ammonia induced the precipitation of gelatinous yellow-brown colloidal slurry. The slurry was stirred for 60 min in a glass reactor, subsequently transferred into pyrex glass bottles, sealed and aged *"hydrothermally"* in an air circulated oven for 5 days at 90 °C. After which, the mixture was cooled and the resulting precipitate was filtered and washed repeatedly with warm DI water. The resulting cakes were oven-dried at 120 °C for 12 h and finally calcined at 650 °C for 3 h in air environment. Formation of a solid solution between $Ce^{4+/3+}$, $Zr^{4+}$, $La^{3+}$ & $Y^{3+}$ was achieved through the current preparation route.

## Example 2: Preparation of Supported Nickel oxide Catalysts:

A nominal 5 wt.% Ni was loaded over the above-prepared supports (I) (refer to paragraph [00100]) by standard wet impregnation method. Similarly the binary oxide supports CZ(0.5) and CZ(1.25) were also impregnated by same procedure to yield corresponding catalysts i.e., NZC(0.5) and NCZ(1.25). In a typical impregnation 14.25 g of catalyst support (I) is immersed in 127.75 ml of 0.1 M $Ni(NO_3)_2$ solution. The mixture was subjected to slow heating under constant stirring in a hot water bath, so as to remove the excess water; the dried powders thus obtained were calcined at 650 °C in air for 3h. The calcined catalysts are reduced *in situ* during the course of reaction in order to reduce the NiO species to metallic Ni species. The reduction is carried out at 700 °C in flowing $5\%H_2/bal.N_2$.

## Example 3: Catalyst Characterization

### a. Surface area and pore size distribution analysis

The BET surface area and pore size distribution analyses for all catalysts were obtained by $N_2$ physisorption at liquid $N_2$ temperature using a Micromeritics ASAP 2010 apparatus. Prior to analysis, all the samples were degassed for 6 h at 180 °C under vacuum. Pore size distribution and average pore volume were analyzed using the desorption branch of the $N_2$-isotherm. Each sample was analyzed by $N_2$ physisorption at least twice in order to establish repeatability. The error in these measurements was $\leq 1\%$.

### b. XRD measurements

Powder XRD patterns were recorded on a Bruker Discover diffractometer using nickel-filtered $CuK\alpha$(0.154056 nm) as the radiation source. The intensity data were collected over a 2θrange of 10-90° with a step size of 0.02° using a counting time of 1 s per point. Crystalline phases were identified through comparison with the reference data from ICDD files [22].

### c. TPR measurements

$H_2$-TPR of various catalyst samples was performed on a Quantachrome ChemBET 3000 unit equipped with a thermal conductivity detector (TCD). For all the samples (except pristine NiO) investigated by TPR, exactly same amount was analyzed, so as to make comparison possible. Prior to TPR measurements, the samples were degassed at 180 °C in an inert atmosphere ($N_2$ UHP grade) for 2h. The reducibility of the supports as well as that of catalysts prepared in the current study, were studied by TPR technique in the temperature range from ambient to 1050 °C at a heating rate of 15 °C/min, using $5\%H_2/bal.N_2$ as the reactive gas (flow rate = 45 sccm). The total reactive gas consumed during TPR analysis was measured. The $H_2$ uptake as a function of TCD response vs. temperature was plotted. A few samples were analyzed by TPR at least twice in order to establish reproducibility. The error in $T_{max}$ values was found to be less than $\pm 4$ °C.

### d. Raman analysis

The Raman analyses were performed on a Renishaw inVia Raman Microscope using a $Ar^+$ laser (Spectra Physics) operating at 514.5 nm. The laser beam (10 mW at the laser) was focused onto a pelletized sample using a Leica 20X NPLAN objective (NA=0.40). The Raman spectra were acquired using a 10 s detector acquisition time, and the spectra were accumulated to achieve sufficient signal-to-noise intensities. The spectra were baseline corrected using the Renishaw Wire V3.1 software provided with the instrument. The wavenumbers obtained from spectra are accurate to within 2 cm$^{-1}$.

**e. XPS measurements**

The XPS measurements were performed on a Leybold MAX 200 X-ray Photoelectron Spectrometer using Al K$\alpha$ (1487 eV) radiation as the excitation source. Charging of the catalyst samples was corrected by setting the binding energy of the adventitious carbon (C 1s) at 285 eV [23,24]. The XPS analysis was performed at ambient temperature and at pressures typically on the order of < 10$^{-9}$ torr. Pass energies of 192 and 48 eV were used for survey scan and narrow scan measurements respectively. All binding energies quoted in this study were measured within a precision of ±0.1 eV. The quantitative surface atomic composition was determined by standard methods.

**f. Oxygen Storage Properties (OSC)**

The oxygen storage capacity (OSC) of the support powders was measured on a thermogravimetric analyzer under cyclic reductive and oxidative excursions. A known amount of sample (∼ 50 mg) was loaded into the TGA (Setaram TG/DSC111). The sample was subjected to reduction/oxidation cycles at 800 °C using the following gas mixtures 5%$H_2$ in bal.$N_2$ and 5 %$O_2$ in bal.$N_2$, respectively. Prior to every experiment, the sample was heated to 800 °C in inert atmosphere ($N_2$ UHP) at a ramp rate of 15 °C/min and maintained at 800 °C for 1h, after which the cyclic reduction/oxidation was carried out for 1h each at 800 °C. The flow rate of all the gas mixtures was maintained constant at 30 sccm. The weight loss during reduction cycle and weight gain during oxidation cycle was used to calculate the total OSC of the support powders. The OSC tests were repeated thrice on each sample, in order to establish concurrence and it was found to be precise within the limit of ±2% error.[24]. The OSC experiments were performed in a thermogravimetric analyzer (TGA), under cyclic reductive and oxidative excursions. The OSC experiments were carried out at 800 °C, at which a known amount of sample is subjected to cyclic reduction and oxidation by switching the reactive gas from 5%$H_2$/bal.$N_2$ to 5%$O_2$/bal.$N_2$ respectively. The weight loss during reduction cycle and weight gained during oxidation cycle was monitored by TGA and used to calculate the total OSC of the powders. This technique of OSC evaluation is essentially similar to that described previously [25].

**g. High Resolution Electron Microscopy (HREM)**

The high resolution transmission electron microscopy (HRTEM) study was performed using a JEOL JEM-2100F field emission transmission electron microscope equipped with an ultra high resolution pole-piece (lattice resolution 0.1nm). The images were acquired at with acceleration voltage of 200 kV. TEM specimens were prepared by placing microdrops of nano-particle solution onto a copper grid coated with carbon film (300mesh, EMS).

**h. Metallic Surface area and metal dispersion measurements**

The metallic surface area and metal dispersion in the catalyst samples were estimated by hydrogen chemisorption at 35 °C using a Micromeritics ASAP 2010C instrument. Prior to analyses, the catalyst samples were dried at 120 °C, and then reduced *in situ* in flowing $H_2$ gas (UHP grade) at 700 °C for 3h (in order to mimic the reduced state formed during the course of a typical catalytic run) followed by evacuation at 700 °C for 1 h before cooling down to 35 °C. The metallic surface area ($S_{Ni}$) was calculated with the help of the following expression:

$$S_{Ni} = 13.58 \times 10^{-20} \, N_M \, (m^2/g\text{-cat.})$$

Where $N_M$ is the number of hydrogen molecules adsorbed in the monolayer per gram of catalyst. The above expression was derived by considering the surface occupied per atom of nickel as 6.49 Å$^2$ per atom (considering the density of nickel as 8.91 g/cm$^3$ and a face-centered cubic lattice) and the adsorption stoichiometry as 2 surface nickel atoms per hydrogen molecule. The nickel dispersion (*D*%) was then calculated as the percentage of surface nickel atoms with respect to total nickel atoms in the catalysts [26].The $H_2$ chemisorption analysis was repeated for a few of the samples in order to check reproducibility. The error in these measurements was < 1%.

**Example 4: Performance/Activity Evaluation**

Activity evaluation studies were carried out in a packed bed tubular reactor (PBTR) (1/2" I.D.) made of Inconel 625. The reactor was placed vertically inside a programmable tubular furnace (Zesta Engineering), which was heated electrically. The selection of reduction temperature was based on the maximum $T_{max}$ obtained for Ni from TPR experiments. All the gases were regulated through precalibrated mass (gas) flow controllers with a digital readout unit (Aalborg Instruments). The catalyst bed temperature was measured by means of a sliding thermocouple dipped inside the catalyst bed. Prior to each run, the catalyst was activated *in situ* by reducing it at 700 °C for 2-3h using a gas mixture of 5 vol.% $H_2$ in $N_2$ (flow rate = 100 sccm). The catalyst pretreatment involved the partial reduction of nickel oxide (NiO) to metallic nickel species (Ni). The activity evaluation tests were performed at different temperatures depending on the feedstock utilized. The product reformate stream coming from the reactor was passed through a series of heat exchangers and ice cooled knockout trap to condense water and other liquids, after which, the product gases were analyzed with an online GC/TCD (Agilent 6390 N) equipped with Hayesep Q and Molecular Sieve A columns. The liquids were injected into the reactor system through a motorized syringe pump (Kd science).

**Results and Discussion**

The $N_2$-physisorption isotherms of representative supports and catalysts developed in this study are presented in Figure 1a, 1b, and 1c. The supports and catalysts presented in Figures 1a and 1b were prepared by employing surfactant/metal molar ratio = 0.5, while the supports and catalysts presented in Figure 1c, were obtained from supports prepared by employing surfactant/metal molar ratio = 1.25. The presented isotherms belong to class *type IV,* typical of mesoporous material with strong adsorption affinity [27, 28]. IUPAC classified hysteresis loops on the basis of their symmetry; the hysteresis observed in the Figure 1 is typical type *H2* indicating a complex mesoporous structure [27, 28]. From the Figures 1a, 1b and 1c, it can be inferred that irrespective of the amount of surfactant used, with a surfactant/metal molar ratio$\geq$ 0.4, and irrespective of presence of impregnated NiO phase, the processed supports and catalysts maintain certain order of mesoporosity. Mesoporosity allows for the feedstock-flexible and process-flexible application. The development of strong mesoporous networks and channels can be the attributed to the method of preparation employed in the current application. The BET surface area, pore volume, pore diameter, and pore volume/surface area measurements of the supports [as in formula (I)] and catalysts [as in formula (II)] are shown in Table 2a and 2b respectively. It is noted from the Tables, that surfactant assisted route yields high surface area samples, as compared to samples prepared using the precipitation route (please refer to entries in Table 2a and 2b, where CTAB/Metal molar ratio = 0). The average pore size measurements reveals that both the catalyst and support samples exhibit pores in the size range 50 - 80 Å (mesopores).

A $H_2$ chemisorption technique was employed to estimate the metallic surface area and metal dispersion of the active component (nickel); the observed findings are given in Table 2b. All of the catalyst formulations investigated in the current work, were prepared by a standard wet impregnation method and were loaded with the same amount of nickel, i.e., 5 wt %. During a chemisorption experiment, the sample was dried, reduced in hydrogen, evacuated, then cooled to the analysis temperature (35 °C), and finally evacuated before performing actual measurements. In a volumetric $H_2$ chemisorption measurement, known amounts of hydrogen were dosed and subsequently adsorbed at different partial pressures, resulting in a chemisorption isotherm. This isotherm measurement was repeated after applying an evacuation step at the analysis temperature to remove weakly adsorbed species (back-sorption or a dual isotherm method). The difference between the two isotherms represents the chemically bonded reactive gas and is used to calculate the active metal surface area. This information is combined with information on metal loading to calculate the metal dispersion. The relative measurement of chemically bound hydrogen was used to distinguish all the catalyst formulations investigated in the current study. The results obtained thereof are shown in Table 2b.

To ascertain the composition and phase purity, the catalysts were examined by XRD. The X-ray powder diffraction patterns of a few representative catalyst supports developed in the present project are shown in Figure 2. All the supports exhibit similar diffraction patterns, which could be assigned to the cubic fluorite structure of $Ce_{1-x}Zr_xO_2$ phase [29]. There is no indication of the presence of other phases or phase segregation.

Representative TPR patterns of various ternary oxide supports and Ni-supported catalyst prepared with surfactant/metal molar ratio 0.5 are shown in Figure 3a. As observed, the TPR profile of the pure support (solid lines) exhibits two broad $H_2$ consumption peaks in the temperature range of 600 - 700 and 850 - 1050 °C respectively. These two peaks can be attributed to the reduction of surface and bulk oxygen anions, respectively. The reduction profile observed here is very comparable with that of the pristine ceria sample, which shows two characteristic reduction regimes, surface shell reduction (485 °C) and bulk reduction (850 °C) respectively [30]. According to the literature, TPR trace for ceria is not controlled by the rate of diffusion of the oxygen vacancies; instead, a surface reduction process and the difference of both thermodynamic and kinetic properties existing in the mixed oxide micro crystals are factors that control this rate [31]. The TPR profiles of NiO impregnated supports (dotted lines) exhibit a low temperature $H_2$ uptake peak at ~ 360 - 480 °C denoting the reduction of 'NiO' species to metallic 'Ni' species in addition to the two peaks observed above. Similarly, the TPR patterns of the catalysts obtained from supports, which were prepared by employing surfactant/metal molar ratio = 1.25 are shown in Figure 3b. For reference purposes, TPR profiles of pristine NiO and $5Ni/Ce_{0.6}Zr_{0.4}O_2$ are also included in Figure 3b. Pristine NiO shows a sharp reduction peak at about 440 °C, which can be attributed to

the transformation of $Ni^{2+}$ to $Ni^0$ species. In the case of $5Ni/Ce_{0.6}Zr_{0.4}O_2$, the peak at the lower temperature ($T_{max} \sim 440$ °C) can be attributed to reduction of NiO to Ni, which is followed by a peak at $T_{max} \sim 600$ °C which can be ascribed to the reduction of the surface oxygen species, and the other two broad peaks at higher temperatures ($T_{max} \sim 750$ and 900°C) were due to the reduction of bulk oxygen species. The higher mobility of the surface oxygen ions helps in the removal of lattice oxygen during the reduction process. The coordinately unsaturated surface capping oxygen ions can be easily removed in the low temperature region. However, bulk oxygen requires to be transported to the surface before their reduction. Consequently, the bulk reduction takes place at a higher temperature compared to the surface reduction. The bulk reduction begins only after the complete reduction of the surface sites. According to literature, pristine $ZrO_2$ does not show any sign of reduction below 1000 °C, due to its refractory nature. A comparison between the binary oxide catalyst and ternary oxide catalysts of Figure 3b, reveals that the ternary oxide catalysts exhibited highly complex reduction profiles compared to the one obtained by the binary oxide catalyst. The complexity of the TPR profiles is a measure of the interaction between the active component and support.

Raman Spectroscopy is capable of investigating the modifications taking place in the oxygen sublattice of the samples. Raman spectra of a few representative catalyst supports are collected in Figure 4. As presented in Figure 4, the Raman spectrum of $CeZrM^1O_x$ (where $M^1$ = Ca, Hf, La, Pr, Sm, Sr, and Y) supports are dominated by a strong band at $\sim 460$ cm$^{-1}$ and a broad band in the range 576 - 618 cm$^{-1}$. The 470 cm$^{-1}$ single Raman active mode of F2g symmetry indicates perfect fluorite lattice [32]. No Raman lines due to $ZrO_2$ or other foreign metal oxide ($M^1O_x$) could be observed in line with XRD measurements. According to literature, cubic fluorite structure of ceria (space group *Fm3m*) exhibits only one Raman active mode [32]. The incorporation of foreign cations into ceria lattice during the course of solid solution formation will result in the formation of oxygen vacancies/defects, which perturb the local M-O bond symmetry thus leading to the relaxation of symmetry selection rules. The presence of a weak and less prominent broad band near $\sim 600$ cm$^{-1}$ can be attributed to a non-degenerate LO (longitudinal optical) mode of ceria which arises due to relaxation of symmetry rules as stated earlier [33]. In particular, the substitution of zirconia into ceria lattice with an increase in temperature gives rise to oxygen vacancies, which are responsible for the emergence of the band [33]. It is apparent from the Raman results that $Ce_{0.5}Zr_{0.33}M_{0.17}O_2$ supports are mostly in the cubic form and do not show signs of any tetragonal modification. The relative intensities of the band at 600 and 470 cm$^{-1}$ ($I_{600}/I_{470}$) were calculated and compared in order to get a comparative estimate of the oxygen vacancy ($V\delta$) concentration in the selected samples. In the case of CZ(0.5) and NCZ(0.5), the ratio $I_{600}/I_{470}$ was found to be 0.2 and 0.4, respectively, while in the case of ternary oxide supports and catalysts, it was found to be > 0.4 and >0.75, respectively. From the $I_{600}/I_{470}$ values, it is clear that the $V\delta$ concentration is higher in the ternary oxide samples compared to the binary oxide samples. On the basis of these results, it was established that the $V\delta$ concentration of a binary oxide system increases significantly with the incorporation of a third metal ion into CeZr crystal lattice. Furthermore, the OSC measurements (Table 2a) obtained by TGA also follow a similar trend; i.e., the OSC value of CZ(0.5) was found to be lower than that observed with the ternary oxide samples, showing that the Raman spectroscopy measurements are in agreement with the TGA measurements.

In order to understand the nature of interactions between the different ions ($Ce^{4+/3+}$, $Zr^{4+}$, and $M^{n+}$), the various ternary oxide supports and corresponding catalysts (prepared with surfactant/metal molar ratio = 0.5) were investigated by XPS technique. The representative photoelectron peaks are shown in Figure 5a and 5b, while the electron binding energies (eV) of O 1s, Zr 3d, M(2p/3d/4d/4f) and Ce 3d photoelectron peaks and the corresponding surface atomic composition are presented in Table 1a and 1b. As presented in Figure 5a and 5b and Table 1a and 1b, the photoelectron peaks and the corresponding binding energies seem to be sensitive to the substitution of third metal ion ($M^{n+}$). The electron binding energy values agree well with the literature reports. The O 1s peak was in general broad and complicated due to non-equivalence of surface oxygen ions. As per the literature, the oxygen ions in pure $CeO_2$ exhibit intense peaks at 528.6, 528.8, 529.6 and 530.1 eV, respectively [34-37]. The O 1s binding energy values reported for $ZrO_2$ are 532.7, 530.0, and 530.6 eV, respectively [38]. As shown in Table 1a and 1b, the binding energy of the Zr 3d photoelectron peak ranged between 182.2 and 182.6 eV, which agrees well with the values reported in the literature [23,24]. The $CeO_2$ 3d photoelectron peaks of a few representative ternary mixed metal oxide supports ($CeZrM^1O_x$) and corresponding catalysts ($5Ni/CeZrM^1O_x$) used in this study are shown in Figure 5a and 5b. The assignment of $CeO_2$ 3d photoelectron peaks is ambiguous, because of the complex nature of the spectra, which occurs not only because of multiple oxidation states but also because of the mixing of Ce 4f levels and O 2p states during the primary photoemission process. This hybridization leads to multiple splitting of the peaks into doublets, with each doublet showing further structure that is due to final state effects. On the basis of the works of Burroughs et al.[39], Pfau and Schierbaum [37],and Creaser et al. [40], the Ce 3d spectrum can be assigned as follows. Two sets of spin-orbital multiplets, corresponding to the $3d_{3/2}$ and $3d_{5/2}$ contributions, are labeled as u and v, respectively. The peaks labeled v and v" have been assigned to a mixing of the Ce $3d^9$ $4f^2$ O $2p^4$ and Ce $3d^9$ $4f^1$ O $2p^5$ Ce(IV)final states, and the peak denoted v'" corresponds to the Ce $3d^9$ $4f^0$ O $2p^6$ Ce(IV) final state. On the other hand, lines $v_0$ and v' are assigned to the Ce $3d^9$ $4f^2$ O $2p^5$ and Ce $3d^9$ $4f^1$ O$2p^6$ states of Ce(III). The same assignment can be applied to the u structures, which correspond to the Ce $3d_{3/2}$ levels. As shown in Figure 5a and 5b, the XP spectrum of the ternary oxide samples exhibits peaks that are due to the presence of both $Ce^{4+}$ and $Ce^{3+}$ ions, thus implying that cerium is present at the surface in both 4+ and 3+ oxidation states. In brief, it was found that the cerium ion exists in both $Ce^{4+}/Ce^{3+}$ oxidation states, while zirconium and nickel ions exist in 4+ and 2+ oxidation states respectively. The surface atomic composition of the supports and catalysts are presented in Table 1a and 1b.

OSC is a measure of oxygen storage and release property, it is depicted in the following equations.

$$CeO_2 \Leftrightarrow CeO_{2-x} + 1/2\ O_2$$

$$Ce^{2+} \Leftrightarrow Ce^{3+}$$

Cerium oxide, due to very low $Ce^{3+}/Ce^{4+}$ redox potential of the couple (E = 1.7 eV), can regulate oxygen storage and release properties, depending on the ambient conditions, this remarkable feature is the most desired one for any redox catalytic process [41]. Primarily, ceria was recognized as a promising oxygen storage material, because it keeps a cubic crystal structure even during the alternate storage and release of oxygen and its volume change is small. However, OSC and thermal durability of pure $CeO_2$ were both insufficient for high temperature applications. Addition of other metal ions (isovalent/aliovalent) into $CeO_2$ lattice improves OSC by increasing the number of oxygen defects under reductive conditions [41]. In terms of the reaction rate, the oxygen storage and release reaction is primarily comprised of two reaction steps, namely, surface oxygen diffusion, and bulk oxygen diffusion [29]. In the case of ceria-zirconia solid solutions, surface oxygen and bulk diffusivities were found to correlate with the homogeneity of the Zr- and Ce-atoms distribution in the oxide framework as revealed by $^{18}O/^{16}O$ isotopic exchange method [42].

The OSC experiments were performed in a thermogravimetric analyzer (TGA), under cyclic reductive and oxidative excursions. The experimental schematic is shown in the Figure 6. The OSC experiments were carried out at 800 °C; a known amount of sample is subjected to cyclic reduction/oxidation by switching the reactive gas from $5\%H_2/N_2$ to $5\%O_2/N_2$ respectively. The weight loss during reduction cycle and weight gained during oxidation cycle was monitored by TGA and used to calculate the dynamic OSC of the catalyst powders. The OSC values obtained for various ternary oxide catalysts are shown in Table 2a. We employ this characterization technique, as a means to compliment the catalyst screening.

The redox and catalytic properties of ceria-based composite oxides are mainly dependent upon these main factors: particle size, phase modification, structural defects/distortion (lattice), and chemical nonstoichiometry. In general, reducing the particle size of a catalyst results in increasing surface area and changing its morphology, thus providing a larger number of more reactive edge sites. Especially when the particle size is decreased below 100 nm, the materials become nanophasic where the density of defects increases so that up to half (50%) of the atoms are situated in the cores of defects (grain boundaries, interphase boundaries, dislocations, etc.). The high density of defects in nanophase materials provides a large number of active sites for gas-solid catalysis, while the diffusivity through the nanometer sized interfacial boundaries promotes fast kinetics of the catalyst activation and reactions. Thus, there are several advantages for switching from conventional to nanosized materials. The preparation route adapted in this report, yield nanostructured materials, evidence of which came from the HREM imaging technique as described below [41].

To explore the structural features at the atomic level, HREM studies were performed on some selected representative samples. The TEM global view of $Ce_{0.5}Zr_{0.33}La_{0.17}O_2$ and $Ce_{0.5}Zr_{0.33}Y_{0.17}O_2$ supports are respectively shown in Figure 7. A closer inspection of the image reveals the existence of smaller crystals (5-20 nm) with different crystal alignments, also noticed was the partly amorphous nature of the samples, as evidenced by the XRD profiles. For deeper insight, the analyses of high-resolution images establish the structure, shape and orientation of the crystal within the particles.

### Example 5: Feedstocks and Processes

### a. Dry ($CO_2$) Reforming of Methane

The screening tests performed on various ternary mixed oxide catalysts [as in formula (II)] and quaternary mixed oxide catalysts [as in formula (II)] developed in the present study, are presented in Figure 8a. From the figure, one can infer that among all the catalysts tested, the following ternary catalysts $5Ni/Ce_{0.5}Zr_{0.33}M^1_{0.17}M^2_{0.0}O_2$ ($M^1$ = Ca, La, and Y) perform very well for the $CO_2$ reforming of $CH_4$ with $CH_4$ conversion and $H_2$ selectivity > 90 mol.%. The binary oxide catalysts of composition $5Ni/Ce_{0.60}Zr_{0.40}O_2$ (NCZ) prepared with two different surfactant/metal molar ratios 0.5 and 1.25, were also tested under exactly identical operating conditions, as described below. The corresponding abbreviation used for describing the binary oxide catalysts, in the current document are NCZ(0.5) and NCZ(1.25) respectively. As noted in Figure 8a, among NCZ(0.5) and NCZ(1.25), only the latter shows good results. The catalysts NCZ(1.25) has been previously reported [21]. Significantly, in the present study, all the ternary and quaternary mixed oxide catalysts tested in the current study were prepared with surfactant/metal molar ratio = 0.5.. The reaction conditions employed were T = 800 °C; P = 1 atm.; feed composition $CH_4:CO_2$ = 1:1; pre-reduction temperature = 710 °C for 3h in $5\%H_2/bal.N_2$; catalyst = 0.165 g; diluent quartz sand= 17.6 g; sieve size = 0.3 mm; L/Dp = 293; D/Dp = 42; where L is the catalyst bed length, D is the diameter of the reactor and $D_p$ is the average diameter of the catalyst particle. The best catalysts obtained from the above screening results, i.e., 5 N i/$Ce_{0.5}Zr_{0.33}M^1_{0.17}M^2_{0.0}O_2O_2$ ($M^1$ = Ca, La, and Y) were tested for $CO_2$ reforming of $CH_4$ rich natural gas (biogas) at 900 °C using $CH_4$:$CO_2$ = 1.25:1, under identical operating conditions as stated above, the corresponding results are presented in Figure 8b. As can be noted from Figure 8b, all the three catalysts viz 5Ni/$Ce_{0.5}Zr_{0.33}M^1_{0.17}M^2_{0.0}O_2$ ($M^1$ = Ca, La, and Y) delivered good performance with ~ 78 mol.% $CH_4$ conversion and > 95 mol.% $H_2$ selectivity. The long-term stability test performed on 5Ni/$Ce_{0.5}Zr_{0.33}Ca_{0.17}O_2$ verifies the stability and durability of the system for the $CO_2$ reforming of $CH_4$ reaction (Figure 9.).

The typical $CO_2$ reforming of $CH_4$ reaction is represented below:

$$CO_2 + CH_4 = 2CO + 2H_2$$

The equations used for calculating conversion and selectivity are:

$$CH_4 \text{ conversion } \% = (CH_4)_{in} - (CH_4)_{out} / (CH_4)_{in} \times 100$$

$$CO_2 \text{ conversion } \% = (CO_2)_{in} - (CO_2)_{out} / (CO_2)_{in} \times 100$$

$$H_2 \text{ selectivity } \% = (H_2)_{out} / 2^*[(CH_4)_{in} - (CH_4)_{out}] \times 100$$

**b. Steam Assisted $CO_2$ Reforming of Methane**

A portfolio of ternary mixed oxide catalysts and quaternary mixed oxide catalysts [as in formula (II)] were screened for effectiveness in a steam assisted $CO_2$ reforming of methane reaction and the results obtained thereof are presented in Figure 10. The following ternary catalysts 5Ni/$Ce_{0.5}Zr_{0.33}M^1_{0.17}M^2_{0.0}O_2$ ($M^1$ = Ca, La, and Y), exhibit excellent performance and tolerance towards steam, with $CH_4$ conversion and $H_2$ selectivity > 90 mol.%. The binary oxide catalysts of composition 5Ni/$Ce_{0.60}Zr_{0.40}O_2$ (NCZ) prepared with two different surfactant/metal molar ratios 0.5 and 1.25, were also tested under exactly identical operating conditions, as described below. The corresponding abbreviation used for describing the binary oxide catalysts, in the current document are NCZ(0.5) and NCZ(1.25) respectively. As noted from Figure 10, both NCZ(0.5) and NCZ(1.25), were not promising formulations and were prone to deactivation in the presence of steam. The inherent hydrophilic nature of the ceria-zirconia support offered reduced sensitivity to water inhibition of active sites, leading to catalyst deactivation. The NCZ(1.25) was previously reported [21]. The reaction conditions employed were T = 800 °C; P = 1 atm.; feed composition $CH_4$:$CO_2$:$H_2O$ = 1:1:1; pre-reduction temperature = 710 °C for 3h in 5%$H_2$/bal.$N_2$; catalyst = 0.165 g; diluent quartz sand= 17.6 g; sieve size = 0.3 mm; L/Dp = 293; D/Dp = 42 ; where L is the catalyst bed length, Dis the diameter of the reactor and $D_p$ is the average diameter of the catalyst particle. The performance of the three best catalysts "5Ni/$Ce_{0.5}Zr_{0.33}M^1_{0.17}M^2_{0.0}O_2$ ($M^1$ =Ca, La, & Y)" was evaluated at low operating temperatures i.e., 750 to 500 °C. The results obtained thereof are presented in Figure 11. This is extremely remarkable performance and can pave the way for the potential membrane reactor applications.

The equations used for calculating conversion and selectivity are:

$$CH_4 \text{ conversion } \% = (CH_4)_{in} - (CH_4)_{out} / (CH_4)_{in} \times 100$$

$$CO_2 \text{ conversion } \% = (CO_2)_{in} - (CO_2)_{out} / (CO2)_{in} \times 100$$

$$H_2 \text{ selectivity } \% = (H_2)_{out} / [2^*[(CH_4)_{in} - (CH_4)_{out}]] + [(H_2O)_{in} - (H_2O)_{out}] \times 100$$

**c. Partial Oxidation of Hexadecane (CPOx$C_{16}$)**

Figure 12 shows the results of a parametric study on screening a portfolio of catalyst formulations with nominal composition 5Ni/$Ce_{0.5}Zr_{0.33}M^1_{0.17}M^2_{0.0}O_2$ and 5Ni/$Ce_{0.5}Zr_{0.33}M^1_{0.085}M^2_{0.085}O_2$ [as in formulae (II)] for catalytic partial oxidation of hexadecane (CPOx$C_{16}H_{34}$). All the above tested catalysts were obtained from supports which were, inturn, prepared by employing surfactant/metal molar ratio = 0.5. In order to prove the non-applicability of binary oxide catalyst 5Ni/Ce$_{0.60}$Zr$_{0.40}$O$_2$ (NCZ) prepared with surfactant/metal molar ratios 0.5 for feedstock and process flexible application, NCZ(0.5) was also tested for the current application under identical operating conditions. The CPOxC$_{16}$H$_{34}$ was carried out in a packed bed tubular reactor. The main objective of this study was to screen the various catalysts for effectiveness and stability. The most promising candidates for the above application are 5Ni/Ce$_{0.5}$Zr$_{0.33}$M$^1_{0.17}$M$^2_{0.0}$O$_2$ (M$^1$ = Ca, La, and Y) and 5Ni/Ce$_{0.5}$Zr$_{0.33}$M$^1_{0.085}$M$^2_{0.085}$O$_2$ (M$^1$ = Ca; M$^2$ = Y). The reaction conditions employed were T = 850 °C; P = 1 atm.; O$_2$/C molar ratio = 0.5; pretreatment reduction temperature = 700 °C for 2h in 5%H$_2$/95%N$_2$; catalyst = 0.2 g; diluent $\alpha$ -Al$_2$O$_3$ = 7.6 g; sieve size = 0.78 mm; L/Dp = 61.5; D/Dp = 15.9; where L is the catalyst bed length, D is the diameter of the reactor and D$_p$ is the average diameter of the catalyst particle. In summary, catalysts have been developed that completely convert hexadecane fuel to hydrogen-rich gas with a conversion efficiency of > 95%.

The partial oxidation of hexadecane can be represented by the following equation:

$$C_{16}H_{34} + 8\ O_2 = 16\ CO + 17\ H_2$$

The equations used for calculating conversion and selectivity

$$\text{Conversion (hexadecane) \% 'X'} = Carbon_{in} - Carbon_{out}\ /\ C_{in}\ X\ 100$$

$$\text{Selectivity (H}_2\text{) \%} = [(H_2)_{out}]\ /\ [(H_2)\text{theoretically expected} \times X] \times 100$$

$$\text{Yield (H}_2\text{) \%} = [(H_2)_{out}]\ /\ [(H_2)\text{theoretically expected}] \times 100$$

### d. Partial Oxidation of Synthetic Gasoline (CPOxSG)

A mixture of most commonly occurring fuel compounds were mixed together in order to obtain sulfur-free synthetic gasoline, more details are presented in Table 3. The average chemical formula of the synthetic mixture was C$_{8.27}$H$_{15.1}$. The reaction conditions employed for the above reaction were T = 850 °C; P = 1 atm.; O$_2$/C molar ratio = 0.5; pre-reduction temperature = 700 °C for 2h in 5%H$_2$/bal.N$_2$; catalyst = 0.2 g; diluent $\alpha$ -Al$_2$O$_3$ = 7.6 g; sieve size = 0.78 mm; /Dp = 61.5; D/Dp = 15.9; where L is the catalyst bed length, Dis the diameter of the reactor and D$_p$ is the average diameter of the catalyst particle. Based on the parametric screening results obtained for catalytic partial oxidation of hexadecane (C$_{16}$H$_{34}$), only the best catalysts for CPOx-C$_{16}$H$_{34}$ were tested in the present example. All the ternary catalysts tested in this example, were obtained from supports which were prepared by employing surfactant/metal molar ratio = 0.5 and the quarternary catalyst tested for this example, was obtained from the support which was prepared by employing surfactant/metal molar ratio = 1.25. The results obtained thereof are shown in Figure 13. As indicated in Figure 13 all the four catalysts 5Ni/Ce$_{0.5}$Zr$_{0.33}$M$^1_{0.17}$M$^2_{0.0}$O$_2$ (M$^1$ = Ca, La, and Y) and 5Ni/Ce$_{0.5}$Zr$_{0.33}$M$^1_{0.085}$M$^2_{0.085}$O$_2$ (M$^1$ = Ca; M$^2$ = Y) were found to be active with considerable stability for the above reaction under the above stated reaction conditions. In summary, catalysts have been developed that completely convert synthetic gasoline into hydrogen-rich gas with a conversion efficiency of - 50%, while removing the carbon and eliminating the impact of aromatics.

Partial oxidation of synthetic gasoline is presented in the following equation:

$$C_{8.27}H_{15.1} + 8.27/2\ O_2 = 8.27\ CO + 7.55\ H_2$$

The equations used for calculating conversion and selectivity

$$\text{Conversion (Synthetic Gasoline) \% 'X'} = Carbon_{in} - Carbon_{out}\ /\ Carbon_{in}\ X\ 100$$

$$\text{Selectivity (H}_2\text{) \%} = [(H_2)_{out}]\ /\ [(H_2)\text{theoretically expected} \times X] \times 100$$

$$\text{Yield (H}_2\text{) \%} = [(H_2)_{out}]\ /\ [(H_2)\text{theoretically expected}] \times 100$$

**f. Partial Oxidation of Synthetic Diesel (CPOxSD)**

According to literature, petroleum-derived diesel is composed of about 75% saturated hydrocarbons (primarily parafins including $n$-, $iso$- and cycloparaffins), and 25% aromatic hydrocarbons (including naphthalenes and alkylbenzenes). The average chemical formula for common diesel fuel is $C_{12}H_{23}$, ranging approximately from $C_{10}H_{20}$ to $C_{15}H_{28}$ [43]. Following the above information, various generic chemical compounds that are predominantly found in the commercial diesel were mixed together to prepare a known mixture of synthetic diesel. The compounds chosen represent different classes of compounds normally found in commercial diesel. Most of these compounds are members of the paraffinic, naphthenic, or aromatic class of hydrocarbons; each class has different chemical and physical properties. Further details of their physical properties and relative composition can be found in Table 4. The average density and average molecular weight of the mixture was found to be 0.8 g/ml and 190.16 g/mol respectively; the average chemical formula of the synthetic mixture was $C_{13.55}H_{27.2}$. Owing to the complex nature of the fuel, diesel reforming poses several unique technical challenges. The reaction conditions employed for the above reaction were T = 900 °C; P = 1 atm.; $O_2$/C molar ratio = 0.725; pre-reduction temperature = 700 °C for 2h in 5%$H_2$/bal.$N_2$; L/Dp = 61.5; D/Dp = 15.9 where L is the catalyst bed length, D is the diameter of the reactor and $D_p$ is the average diameter of the catalyst particle. Based on the parametric screening results obtained for catalytic partial oxidation of hexadecane ($C_{16}H_{34}$), only the best catalysts for CPOx-$C_{16}H_{34}$ were tested in the current example. All the ternary catalysts tested for the current example, were obtained from supports which were prepared by employing surfactant/metal molar ratio = 0.5 and the quaternary catalyst tested for the current application, was obtained from the support which was prepared by employing surfactant/metal molar ratio = 1.25. The results obtained thereof over the "5Ni/$Ce_{0.5}Zr_{0.33}M^1_{0.17}M^2_{0.0}O_2$ ($M^1$ = Ca, La, Y)" and 5Ni/$Ce_{0.5}Zr_{0.33}M^1_{0.085}M^2_{0.085}O_2$ ($M^1$ = Ca; $M^2$ = Y) catalysts at W/$F_{SD}$ = 10.57 g cat. h/mol. SD are shown in Figure 14a. From the current screening results it was noted that the 5Ni/$Ce_{0.5}Zr_{0.33}Ca_{0.17}O_2$ and 5Ni/$Ce_{0.5}Zr_{0.33}Ca_{0.085}Y_{0.085}O_2$ fare well for this reaction, under the stated experimental conditions. In order to study the influence of surfactant/metal molar ratio on the catalytic activity, the two best catalysts, chosen from the above run (Figure 14a) were prepared by employing two different CTAB/metal ratios i.e., 0.5 and 1.25, the results obtained thereof at W/$F_{SD}$ = 21.1 g cat. h/mol. SD are shown in Figure 14b. From Figure 14b it can be said that the CTAB/metal = 0.5 yielded a better catalyst in the case of the 5Ni/$Ce_{0.5}Zr_{0.33}Ca_{0.17}$ formulation, while the CTAB/metal = 1.25 yielded a better catalyst in the case of the 5Ni/$Ce_{0.5}Zr_{0.33}Ca_{0.085}Y_{0.085}O_2$ formulation. Among the four catalyst formulations tested in Figure 14b, the best ternary oxide formulation viz., 5Ni/$Ce_{0.5}Zr_{03.3}Ca_{0.17}O_2$ (CTAB/metal = 0.5) and the best quaternary oxide formulation viz., 5Ni/$Ce_{0.5}Zr_{0.33}Ca_{0.085}Y_{0.085}O_2$ (CTAB/metal = 1.25), were further subjected for extended period of operation (-20 h) and were found to be promising catalysts under the conditions of operation as shown in Figure 14c. In summary, catalysts have been developed that completely convert synthetic diesel fuel to hydrogen-rich gas (syngas) with a conversion efficiency of > 90%, and are tolerant to coking and eliminate the impact of aromatic components.

Partial oxidation of synthetic diesel is presented in the following equation:

$$C_{13.55}H_{27.2} + 13.55/2\ O_2 = 13.55\ CO + 13.6\ H_2$$

The equations used for calculating conversion and selectivity are:

$$\text{Conversion (Synthetic Diesel) \% 'X'} = \text{Carbon}_{in} - \text{Carbon}_{out}\ /\ \text{Carbon}_{in}\ X\ 100$$

$$\text{Selectivity } (H_2)\ \% = [(H_2)_{out}]\ /\ [(H_2)\text{theoretically expected} \times X] \times 100$$

$$\text{Yield } (H_2)\ \% = [(H_2)_{out}]\ /\ [(H_2)\text{theoretically expected}] \times 100$$

**f. Steam Reforming of a Liquid Mixture of Oxygenated hydrocarbons (Oxy-HCR)**

As an example, the compounds chosen to prepare the oxygenated hydrocarbon mixture were butanol, propanol, ethanol, lactic acid, ethylene glycol and glycerol. An equimolar mixture of all the above six oxygenated hydrocarbons was prepared by mixing the individual compounds with water. The amount of water added was based on stoichiometry of the following equations (below).

$$C_4H_9OH + 7H_2O \rightarrow 4CO_2 + 12H_2$$

$$C_2H_7OH + 5H_2O \rightarrow 3CO_2 + 9H_2$$

$$C_2H_5OH + 3H_2O \rightarrow 2CO_2 + 6H_2$$

$$C_3H_6O_3 + 3H_2O \rightarrow 3CO_2 + 6H_2$$

$$C_2H_6O_2 + 2H_2O \rightarrow 2CO_2 + 5H_2$$

$$C_3H_8O_3 + 3H_2O \rightarrow 3CO_2 + 7H_2$$

The weighted average of the synthetic mixture can be represented as follows:

$$C_{2.8}H_{7.3}O_{1.9} + 3.7H_2O \rightarrow 2.8CO_2 + 7.35H_2$$

The average molecular weight and density of the mixture was calculated as 71.2 and 1.0 respectively. The reaction conditions employed were: Reduction temperature = 700°C for 2 h in presence of 5% $H_2$/bal.$N_2$; Reaction temperature = 700 °C, 600 °C, and 500 °C; steam/feed = 2; Feed flow rate: 0.1 mL/min; $W/F_{Oxy-HC}$ = 8.58 g cat. h/mol. Oxy-HC; Catalyst amount: 0.25 g (0.78 mm particle size) mixed with 7.6 g of diluents ($\alpha$-alumina of 0.78 mm particle size); $L/D_p$ = 61.5 (> 50) and $D/D_p$ = 15.9 (>10); where L is the catalyst bed length, Dis the diameter of the reactor and $D_p$ is the average diameter of the catalyst particle. The following five catalysts: $5Ni/Ce_{0.5}Zr_{0.33}M^1_{0.17}M^2_{0.0}O_2$ ($M^1$ = Ca, Gd, La, Mg, & Y) (obtained from supports prepared with surfactant/metal molar ratio=1.25) were tested for their reforming efficiency and stability at 700 °C, 600 °C, and 500 °C using the above prepared oxygenated hydrocarbon mixture. The results obtained thereof are shown in Figure 15. As noted from Figure 15, all the formulations exhibit stable performance at 700 °C, while only three formulations $5Ni/Ce_{0.5}Zr_{0.33}M^1_{0.17}M^2_{0.0}O_2$ ($M^1$ = Ca, Gd, & Mg) among them were found to be active at 600 °C and 500 °C temperatures. In order to test the applicability of a quaternary oxide formulation $5Ni/Ce_{0.5}Zr_{0.33}Ca_{0.085}Y_{0.085}O_2$ prepared with surfactant/metal molar ratio = 1.25, it was also tested in the present example at 500 °C, under identical operating conditions as stated above. As can be noted from Figure 15, the $5Ni/Ce_{0.5}Zr_{0.33}Ca_{0.085}Y_{0.085}O_2$ was also a good catalyst in this example, however it was one of the best catalyst formulation for the partial oxidation of hydrocarbon-based feed stocks. The equations used for calculating conversion and selectivity are

$$Conversion = {Organic_{in} - organic_{out}}\Big/{Organic_{in}}$$

$$Selectivity_{H_2} = {H_{2\,out}}\Big/{7.35 \times conversion \times organic_{in}}$$

$$Alkane\ Selectivity = {Carbon_{alkane}}\Big/{TotalCarbon_{product}}$$

where, organic$_{in}$ is total moles of oxygenated hydrocarbon fed in and organic$_{out}$ is total moles of organic out and $H_{2out}$ is total moles of $H_2$ out. Organic$_{out}$ and $H_{2out}$ were calculated based on the $T_{out}$, which, is total flow rate out.

**Discussion**

In order to establish the uniqueness of the catalysts developed for feed-stock and process flexibility, relationships between their resultant catalytic activity and their inherent textural, physico-chemical, and surface characteristics were formulated and the resultant relationships were termed as structure-activity relationships (SARs). The SARs aid in understanding the catalytic phenomena involved in any given reforming process from the perspective of catalyst structure. Furthermore the SARs are useful determining the characteristics of the catalysts that contribute towards their unique performance. SARs also help better understand the surface reactivity, shape selectivity, and hydrodynamic properties and ultimately to establish the uniqueness of the given catalyst system [4].

Figures 16, 17, and 18 represent the various SARs generated in the present study using $CO_2$ reforming of $CH_4$, steam-assisted $CO_2$ reforming of $CH_4$, and oxygenated hydrocarbon steam reforming, respectively. The following parameters namely, 1. Oxygen storage capacity (OSC) (A); 2. Pore Volume/Surface Area (B); 3. metal (nickel) dispersion (C); and 4. Reducibility (D); were chosen to establish the SARs, except in the case of Figure 18. The selection was based on their significance and relation to the performance of the catalysts. Also, an attempt was made to establish the contribution(s) of these parameters to their catalytic behavior. The OSC values were obtained from thermo-gravimetric experiments as described previously. The Pore Volume/Surface Area were obtained from the desorption branch of $N_2$-isotherm (Figure 1a, 1b, & 1c), the metallic dispersion values were obtained from the $H_2$ chemisorption studies (Table 2b) and lastly the reducibility values were obtained from the TPR measurements, more specifically the $T_{max}$ values pertaining to the reduction of NiO to Ni were used for calculating reducibility (where reducibility = $1/T_{max}$ * 100).

Figures 16A and 17A, represents the correlation plot of activity vs OSC. As evident from Figure 16A and 17A, in general, an increase in OSC leads to an improvement in the resultant catalytic activity. From the present observation, it is clear that OSC plays a role in the ability of the catalyst to outperform others. It is should be mentioned here that the observed catalytic activity cannot be attributed to a single parameter, as a combination of different parameters are responsible for the final resultant activity and the percentage contribution from each parameter is not same. The OSC is the ability of the catalyst to give out/intake oxygen depending on the ambient conditions. The higher the OSC of a given formulation, the better is the regenerability/regeneration capacity of the catalyst thereby providing it with the ability to resist and/or arrest the coking phenomena [41]. Figures 16B and 17B presents the correlation plots of activity vs pore volume/surface area, as noted it is very explicit that pore volume per unit surface area plays a significant role on the resultant activity. Bigger the value of the pore volume per unit surface area higher is the resultant activity of the catalyst formulation. Interestingly, the catalyst formulations namely $5Ni/Ce_{1-(x+y+z)}Zr_xM^1_yM^2_zO_2$ ($M^1$ = Al, Ca, La, and Y) with pore volume per unit surface area $\geq 1.7 \times 10^{-9}$ m exhibit exceptional activity with enhanced stability. The correlation between catalyst activity vs nickel dispersion is plotted in Figures 16C-18C, as evident from the figures, the catalyst performance improves with increasing nickel dispersion. These results are explainable, as increasing nickel dispersion, increases the population density of the available surface active sites, which inturn leads to improvement in activity and stability. The relationship between catalyst reducibility and activity is presented in figures 16D-18D. The SAR trends show a monotonic increase in the relationship between activity and reducibility, which means that easily reducible catalysts perform better in terms of both stability and activity. Note that the larger the value of reducibility, the lower its reduction temperature. It is should be noted that, $5Ni/Ce_{0.6}Zr_{0.4}O_2$ binary oxide catalysts perform well in a typical dry reforming reaction; however, they are prone to deactivation in the presence of steam and are not suitable for the reforming of higher hydrocarbons (medium/long chain) or oxygenated hydrocarbons. Therefore, they cannot be employed in feedstock and process flexible applications. The results presented in Figures 10 and 12 verify the above point. As noted from Figure 10, the introduction of steam in the dry reforming of methane reaction over $5Ni/C_{e0.6}Z_{r0.4O2}$ rapidly deactivates the catalysts. On the contrary, most of the ternary oxide-based catalysts exhibit excellent activity and stability in the presence of steam (Figure 10). Similarly, CPOx of hexadecane over $5Ni/C_{e0.6}Z_{r0.4O2}$ catalyst, yields poor results (Figure 12), compared to that of the ternary and quaternary oxide-based counterparts. Another characteristic distinction between the binary vs ternary oxide and quaternary oxide catalysts is that the product reformate gas contains large amounts of ethane when the binary oxide catalysts are used, however ethane is not formed when the ternary and quaternary oxide catalysts are used in CPOx-$C_{16}H_{34}$.

The structure-activity relationship generated in the present study is summarized below. High OSC, high pore volume/surface area, and ease of reducibility combined with high surface nickel content, better nickel dispersion lead to improved catalyst performance. The incorporation of the third oxide and fourth oxide in the support formulation imparts to the ternary and quaternary systems unique characteristics that make them perform better as feedstock flexible and process flexible catalysts compared to binary oxide support systems. Furthermore, the correlation plots (Figures 16A-D; 17A-D; 18C-D), ascertain the uniqueness of the developed catalysts. As outlined earlier, for catalyst design, the desired functionalities expected to be present in the resultant catalyst formulation are, easy reducibility, reasonable high surface area, high pore volume/surface area, nano-sized particles, high OSC, higher surface nickel content, better dispersion of nickel component and finally formation of a solid solution in cubic or pseudo cubic crystal structure combined with lower surface cerium content. Accordingly the catalysts of the present application were tailored during the course of synthesis, by employing an atom-efficient modified version of surfactant-assisted route with hydrothermal ageing under autogenous pressure conditions in addition to the selection of the appropriate third oxide and fourth oxide in an appropriate composition to yield the expected results. The activity is a cumulative effect of the mentioned characteristics (textural, physico-chemical, surface, bulk, etc). The absence of a single desired trait, in a catalyst formulation could be detrimental leading to poor performance. To conclude, by employing an improved tailor-made synthetic strategy, the current research has succeeded in bringing various desirable traits into a given catalyst formulation, thus leading to the development of *"feedstock flexible and process flexible reforming catalysts"*.

## Table 1a: XPS Binding energies

| M = | Binding Energy (eV) | | | | | | | | |
|---|---|---|---|---|---|---|---|---|---|
| | $Ce_{1-(x+y+z)}Zr_xM^1_yM^2_zO_2$ Supports | | | | $5Ni/Ce_{1-(x+y+z)}Zr_xM^1_yM^2_zO_2$ Catalysts | | | | |
| | Zr 3d | O 1s | Ce 3d | $M^1$ | Zr 3d | O 1s | Ce 3d | $M^1$ | Ni 2p |
| Ca | 182.3 | 530.2 | 883.4 | 347 (2p) | 182.25 | 530.0 | 883.0 | 346.8 (2p) | 855.6 |
| Hf | 183.2 | 531.6 | 884.0 | 18.0 (4f) | 182.8 | 530.8 | 883.6 | 17.8 (4f) | 856.6 |
| La | 182.2 | 530.0 | 883.0 | 834.6 (3d) | 182.2 | 530.4 | 883.0 | 834.9 (3d) | 855.9 |
| Pr | 182.5 | 530.5 | 883.4 | 934.1 (3d) | 182.5 | 530.6 | 883.5 | 934.2 (3d) | 856 |
| Sm | 183.0 | 531.0 | 883.6 | 1084 (3d) | 182.6 | 530.7 | 883.4 | 1083.4 (3d) | 856.6 |
| Tb | 182.5 | 530.5 | 883.6 | 153.2 (4d) | 182.6 | 530.7 | 883.6 | 1243.5 (3d) | 856.5 |
| CZ(1.25) | 182.7 | 530.6 | 883.5 | - | 182.8 | 530.8 | 883.7 | - | 856.9 |
| CZ(0.5) | 182.9 | 530.8 | 883.8 | - | 183 | 531.0 | 884.0 | - | 856.8 |

## Table 1b: Surface atomic composition measurements

| M = | Surface Atomic Composition (%) | | | | | | | | |
|---|---|---|---|---|---|---|---|---|---|
| | $Ce_{1-(x+y+z)}Zr_x M^1_yM^2_zO_2$ Supports | | | | $5Ni/Ce_{1-(x+y+z)}Zr_x M^1_yM^2_zO_2$ Catalysts | | | | |
| | Zr | Ce | $M^1$ | Zr/Ce | Zr | Ce | $M^1$ | Ni | Zr/Ce |
| Ca | 41.4 | 28 | 30.6 | 1.50 | 37 | 21.15 | 27.35 | 14.5 | 1.75 |
| Hf | 43.5 | 37.2 | 19.3 | 1.20 | 46.9 | 35.4 | 14.8 | 16 | 1.32 |
| La | 49.5 | 30.3 | 20.2 | 1.60 | 31.2 | 22.9 | 12.9 | 33 | 1.36 |
| Pr | 44.4 | 31.9 | 23.7 | 1.40 | 40.4 | 25.6 | 21.9 | 12.1 | 1.58 |
| Sm | 46.5 | 34 | 19.5 | 1.35 | 39.3 | 23.8 | 20.3 | 16.6 | 1.65 |
| Tb | 49.15 | 30.5 | 20.35 | 1.60 | 40.8 | 26.2 | 21.1 | 11.9 | 1.55 |
| CZ(1.25) | 59.2 | 40.8 | - | 1.45 | 55.0 | 31.0 | - | 14.0 | 1.77 |
| CZ(0.5) | 62.2 | 37.8 | - | 1.65 | 60.9 | 32.8 | - | 6.3 | 1.85 |

### Table 2a: Textural Characterization of supports

| $M^1/M^2$ = | Surfactant/metal molar ratio | BET SA $(m^2 g^{-1})$ | Pore Volume $(cc\ g^{-1})$ | Avg. Pore Diameter (Å) | Pore Vol./BET SA($10^{-9}$ m) | OSC* $\mu$mol-O/g.cat. |
|---|---|---|---|---|---|---|
| $Ce_{0.5}Zr_{0.33}M^1_{0.17}M^2_{0.0}O_2$ | | | | | | |
| Al | 0.5 | 161 | 0.28 | 52.5 | 1.72 | 1031 |
| Ba | 0.5 | 201 | 0.33 | 49.6 | 1.64 | 1031 |
| Ca | 0.5 | 145 | 0.26 | 53.8 | 1.75 | 1156 |
| Gd | 0 | 157.8 | 0.18 | 40.8 | 1.14 | - |

(continued)

| $M^1/M^2$ = | Surfactant/metal molar ratio | BET SA ($m^2$ $g^{-1}$) | Pore Volume (cc $g^{-1}$) | Avg. Pore Diameter (Å) | Pore Vol./BET SA($10^{-9}$ m) | OSC* $\mu$mol-O/g.cat. |
|---|---|---|---|---|---|---|
| $Ce_{0.5}Zr_{0.33}M^1_{0.17}M^2_{0.0}O_2$ | | | | | | |
| Gd | 0.5 | | | | | - |
| Hf | 0.5 | 244 | 0.3 | 39.9 | 1.22 | 906 |
| La | 0.5 | 188 | 0.4 | 68.0 | 2.12 | 1094 |
| Pr | 0.5 | 175 | 0.27 | 46.0 | 1.53 | 1031 |
| Sm | 0.5 | 182 | 0.26 | 42.6 | 1.41 | 1063 |
| Sr | 0.5 | 189 | 0.32 | 52.4 | 1.69 | 1188 |
| Tb | 0.5 | 196 | 0.27 | 44.4 | 1.37 | 1031 |
| Y | 0.5 | 208 | 0.56 | 90.5 | 2.68 | 938 |
| Ca | 1.25 | | | | | - |
| Gd | 1.25 | 200 | 0.33 | 49.6 | 1.65 | - |
| M | 1.25 | 146.4 | 0.37 | 78 | 2.5 | - |
| $Ce_{0.41}Zr_{0.27}M^1_{0.32}M^2_{0.0}O_2$ | | | | | | |
| Ca | 0.5 | 131.8 | 0.22 | 52.1 | 1.67 | - |
| La | 0.5 | 196.8 | 0.33 | 50.0 | 1.67 | - |
| $Ce_{0.5}Zr_{0.33}M^1_{0.085}M^2_{0.085}O_2$ | | | | | | |
| Ca/Y | 1.25 | 129.8 | 0.375 | 187.3 | \| 2.89 | - |
| $Ce_{0.6}Zr_{0.4}O_2$ | | | | | | |
| | 1.25 | 201 | 0.3 | 41 | 1.5 | 1093 |
| | 0.5 | 232 | 0.4 | 51 | 1.7 | 937 |

**Table 2b: Textural Characterization of catalysts**

| $M^1/M^2$ = | Surfactant/metal molar ratio | BET SA ($m^2$ $g^{-1}$) | Pore Volume (cc $g^{-1}$) | Avg. Pore Diameter (Å) | Pore Vol./ BET SA ($10^{-9}$ m) | Ni Dispersion (%) $D_{Ni}$ | Ni Surface Area ($m^2$ $g^{-1}$ cat.) $S_{Ni}$ |
|---|---|---|---|---|---|---|---|
| $5Ni/Ce_{0.5}Zr_{0.33}M^1_{0.17}M^2_{0.0}O_2$ | | | | | | | |
| Al | 0.5 | 99.5 | 0.2 | 73 | 2.01 | 7.6 | 2.5 |
| Ba | 0.5 | 133.2 | 0.21 | 50.5 | 1.57 | 10.8 | 3.6 |
| Ca | 0.5 | 103.7 | 0.19 | 57.7 | 1.83 | 11.5 | 3.8 |
| Hf | 0.5 | 194.5 | 0.245 | 43.3 | 1.26 | 3.3 | 1.1 |
| La | 0.5 | 168.6 | 0.34 | 70.7 | 2.01 | 5.7 | 1.9 |
| Mg | 0.5 | - | - | - | - | 6.6 | 2.2 |
| Pr | 0.5 | 123.8 | 0.2 | 59.1 | 1.61 | 5.4 | 1.8 |
| Sm | 0.5 | 170.4 | 0.25 | 46.3 | 1.46 | 3.7 | 1.25 |
| Sr | 0.5 | 156.5 | 0.245 | 50.2 | 1.56 | 10 | 3.4 |
| Tb | 0.5 | 126.6 | 0.19 | 49.1 | 1.50 | 5.6 | 1.9 |
| Y | 0.5 | 187 | 0.36 | 68 | 1.92 | 5.4 | 1.8 |
| Gd | 0 | 81.9 | 0.15 | 59.2 | 1.83 | - | - |
| Ca | 1.25 | 108.8 | 0.22 | 61.3 | 2.00 | 6.2 | 2.1 |
| Gd | 1.25 | 124.5 | 0.29 | 59.7 | 2.29 | 7.4 | 2.5 |

(continued)

| M$^1$/M$^2$ = | Surfactant/metal molar ratio | BET SA (m$^2$ g$^{-1}$) | Pore Volume (cc g$^{-1}$) | Avg. Pore Diameter (Å) | Pore Vol./ BET SA (10$^{-9}$ m) | Ni Dispersion (%) D$_{Ni}$ | Ni Surface Area (m$^2$ g$^{-1}$ cat.) S$_{Ni}$ |
|---|---|---|---|---|---|---|---|
| | | | 5Ni/Ce$_{0.5}$Zr$_{0.33}$M$^1_{0.17}$M$^2_{0.0}$O$_2$ | | | | |
| La | 1.25 | 140.1 | 0.32 | 73.4 | 2.30 | 4.3 | 1.4 |
| Mg | 1.25 | 128.8 | 0.29 | 72.3 | 2.24 | 8.6 | 2.9 |
| Y | 1.25 | 173.7 | 0.4 | 54.8 | 2.30 | 5.8 | 1.9 |
| | | | 5Ni/Ce$_{0.41}$Zr$_{0.27}$M$^1_{0.32}$M$^2_{0.0}$O$_2$ | | | | |
| Ca | 0.5 | 91.5 | 0.17 | 55.7 | 1.85 | - | - |
| | | | 5Ni/Ce$_{0.5}$Zr$_{0.33}$M$^1_{0.085}$M$^2_{0.085}$O$_2$ | | | | |
| Ca/Y | 1.25 | 120.3 | 0.32 | 81.9 | 2.66 | 6.6 | 2.2 |
| | | | 5Ni/Ce$_{0.6}$Zr$_{0.4}$O$_2$ | | | | |
| | 1.25 | 184 | 0.2 | 41 | 1.1 | 7.4 | 2.5 |
| | 0.5 | 215 | 0.3 | 51 | 1.4 | 5.4 | 1.8 |

**Table 3: Physical Properties of Fuels and Their Percentage Composition in Synthetic Gasoline (C$_{8.27}$H$_{15.1}$)**

| component | density (g mL$^{-1}$) | molecular weight (g mol$^{-1}$) | purity (%) | Volume fraction (%) | wt (%) |
|---|---|---|---|---|---|
| 2,2,4-trimethylpentane | 0.69 | 114.2 | 99.9 | 0.5 | 45.5 |
| ethylcyclohexane | 0.77 | 98.2 | 99.5 | 0.05 | 5.1 |
| 1,2,4-trimethylbenzene | 0.88 | 120.2 | 99 | 0.35 | 40.4 |
| hexane | 0.66 | 86.2 | 99.9 | 0.05 | 4.3 |
| 1-octene | 0.72 | 112.2 | 99.0 | 0.05 | 4.7 |
| Total/Average | 0.759 | 114.01 | | 1.00 | 100 |

**Table 4: Physical properties of various components and their percentage composition in the synthetic diesel (C$_{13.55}$H$_{27.2}$)**

| Chemical Compound | Volume Fraction (%) | Density (g/mL) | Mol. Wt., (g/mol) | Average Density (g/mL) | Average Molecular Weight (g/mol.) | Molecular Formula |
|---|---|---|---|---|---|---|
| Hexadecane (50%) | 0.500 | 0.773 | 226.44 | 0.387 | 113.22 | C$_{16}$H$_{34}$ |
| Dodecane (25%) | 0.250 | 0.748 | 170.34 | 0.187 | 42.585 | C$_{12}$H$_{26}$ |
| Decahydronaphthalene (5%) | 0.050 | 0.896 | 138.25 | 0.045 | 6.9125 | C$_{10}$H$_{18}$ |
| Butyl cyclohexane (5%) | 0.050 | 0.800 | 140.27 | 0.040 | 7.0135 | C$_{10}$H$_{20}$ |
| 1,2,3,4-Tetrahydronaphthalene (5%) | 0.050 | 0.970 | 132.21 | 0.049 | 6.6105 | C$_{10}$H$_{12}$ |
| Butyl Benzene (5%) | 0.050 | 0.860 | 134.22 | 0.043 | 6.711 | C$_{10}$H$_{14}$ |
| 1-methyl naphthalene (5%) | 0.050 | 1.001 | 142.20 | 0.050 | 7.11 | C$_{11}$H$_{10}$ |
| Total/Averae | 1.000 | | | 0.800 | 190.16 | C$_{13.55}$H$_{27.2}$ |

FULL CITATIONS FOR DOCUMENTS REFERRED TO IN THE APPLICATION

1. Energy Density of Hydrogen, The Physics Factbook™ Edited by Glenn Elert (http://hypertextbook.com/facts/2005/MichelleFung.shtml).

2. Wagner, U., Richter, S.: 7 Hydrogen technologies. Heinloth, K. (ed.). SpringerMaterials - The Landolt-Bornstein Database (http://www.springermaterials.com). DOI: 10.1007/10858992_16

3. William E. Evenson, The potential for a H2 energy economy, R &D of energy technologies, Annex IV - Hydrogen energy, pg 207.

4. Joan M. Ogden, Prospects for building a H2 energy infrastructure, Annu. Rev. Energy. Environ. 1999.24:227-79.

5. Hu, Y. H.; Ruckenstein, E. AdV. Catal. 2004, 48, 297.

6. Ran, R.; Xiong, G.; Sheng, S.; Yang, W.; Stroh, N.; Brunner, H., (2003). Catalytic Partial Oxidation of n-heptane for Hydrogen Production, Catalysis Letters, 88, 55-59.

7. Zhu, W.; Xiong, G.; Han, W.; Yang, W., (2004). Catalytic Partial Oxidation of Gasoline to Syngas in a Dense Membrane Reactor, Catalysis Today, 93-95, 257-261.

8. Moon, D. J.; Ryu, J. W., (2003). Partial Oxidation Reforming Catalyst for Fuel Cell-Powered Vehicles Applications, Catalysis Letters, 89, 207-212.

9. T. Aicher, B. Lenz, F. Gschnell, U. Groos, F. Federici, L. Caprile, L. Parodi, Fuel processors for fuel cell APU applications, Journal of Power Sources 154 (2006) 503.

10. S.L. Douvartzides, F.A. Coutelieris, A.K. Demin and P.E. Tsiakaras, Fuel options for solid oxide fuel cells: a thermodynamic analysis, AIChE J. 49 (2003), pp. 248-257.

11. Solid State Energy Conversion Alliance (SECA) program (www.seca.doe.gov/)

12. Song, C., Fuel processing for low-temperature and high-temperature fuel cells - Challenges, and opportunities for sustainable development in the 21st century, Catalysis Today 77 (2002) 17-49.

13. "Economic Impact of Ethanol Production" Spring 2006, Ethanol Across America Publication (http://www.ethanolacrossamerica.net/CFDC EconImpact.pdf).

14. Galdamez, J.R., Garcia, L., Bilbao, R., Energy & Fuels 19 (2005) 1133-1142.

15. Vagia, E. Ch., Lemonidou, A.A., Int. J. Hydrogen Energy 32, (2007), 212-223.

16. Iojoiu, E.E., Domine, E.M., Davidian, T., Guilhaume, N., Mirodatos,C., Applied Catalysis, 323, (2007) 147-161.

17. Marban, G. Valdes-Solis, T. (2007) International Journal of Hydrogen energy, 32, 1625-1637.

18. Davda, R.R., Shabaker, J.W., Huber, G.W., Cortright, R.D., Dumesic, J.A., Applied Catalysis B 56 (2005) 171-186.

19. Ni, M., Leung, D.Y.C., Leung, M.K.H., Int. J. Hydrogen Energy 32, (2007) 3228-3247.

20. Wang, D., Montane, D., Chornet, E., Applied Catalysis 143 (1996) 245-270.

21. R.O Idem, P. Kumar, Y. Sun, 'Catalysts for Hydrogen Production' US7824656 B2, November 2nd 2010.

22. The International Centre for Diffraction Data (http://www.icdd.com/index.htm).

23. Briggs, D., Seah, M. P., Eds. Practical Surface Analysis, 2nd ed.; Auger and X-Ray Photoelectron Spectroscopy; Wiley: New York, 1990; Vol. 1.

24. Wagner, C. D.; Riggs, W. M.; Davis, L. E.; Moulder, J. F. InHandbook of X-ray Photoelectron Spectroscopy; Muilenberg, G. E., Ed.;Perkin-Elmer Corporation: Eden Prairie, MN, 1978.

25. M. Ozawa and C.K. Loong, Catal. Today 50 (1999) 329.

26. Iglesia, E.; Boudart, M. J. Catal. 1983, 81, 204-213. Tsay, M.-T.; Chang, F.-W. Appl. Catal. A 2000, 203, 15-22.

27. IUPAC Recommendations, Pure Appl. Chem. 1994, 66, 1739.

28. Françoise Rouquérol, Jean Rouquérol, K. S. W. Sing, Adsorption by powders and porous solids, Academic Press, San Diego, 1999.

29. B.M. Reddy, A. Khan, Catalysis Surveys from Asia 9 (2005) 155.

30. A.Khan, P.G. Smirniotis, J. Mol. Catalysis A: Chemical 280 (2008) 43.

31. F. Giordano, A. Trovarelli, C. de Leitenburg, M. Giona, J. Catal. 193 (2000)273.

32. X.-M. Lin, L.-P. Li, G.-S. Li and W.-H. Su, Mater. Chem. Phys. 69 (2001) 236.

33. J.R. Mc Bride, K.C. Hass, B.D. Poindexter and W.H. Weber, J. Appl. Phys. 76 (1994) 2435.

34. A. Bensalem, F. Bozon-Verduraz, M. Delamar and G. Bugli, Appl. Catal. A Gen. 121 (1995) 81.

35. E. Paparazzo, G.M. Ingo and N. Zacchetti, J. Vac. Sci. Technol. A 9 (1991) 1416.

36. G. Praline, B.E. Koel, R.L. Hance, H.-I. Lee and J.M. White, J. Elect. Spect. Relat. Phenom. 21 (1980) 71.

37. A. Pfau and K.D. Schierbaum, Surf. Sci. 321 (1994) 71.

38. A. Galtayries, R. Sporken, J. Riga, G. Blanchard and R. Caudano,J. Elec. Spect. Relat. Phenom. 88-91 (1998) 951.

39. A. Burroughs, A.F. Hamnett, G. Orchard and G. Thornton, J. Chem. Soc. Dalton Trans. 1 (1976) 1686.

40. D.A. Creaser, P.G. Harrison, M.A. Morris and B.A. Wolfindale,Catal. Lett. 23 (1994) 13.

41. Catalysis by ceria and related material; ed., A. Trovarelli, Imperial College Press, 2002.

42. F. Dong, A. Suda, T. Tanabe, Y. Nagai, H. Sobukawa, H. Shinjoh, M. Sugiura, C. Descorme, D. Duprez, Catalysis Today93-95 (2004) 827.

43. Agency for Toxic Substances and Disease Registry (ATSDR). 1995. Toxicological profile for fuel oils. Atlanta, GA: U.S. Department of Health and Human Services, Public Health Service.

44. Alfons Baiker,Heterogeneous Catalysis - An Interdisciplinary Approach, Chimia 55 (2001) 796.

**Claims**

1. A catalyst support of the formula (I):

$$Ce_aZr_bM^1_cM^2_dO_2 \qquad (I)$$

wherein

a is 0.40 to 0.60;
b is 0.20 to 0.40;
c is 0.05 to 0.40;
d is 0 to 0.20;
a + b + c + d is1; and
$M^1$ and $M^2$ are independently selected from the group consisting of Al, Ba, Ca, Gd, Hf, La, Mg, Pr, Sm, Sr, Tb and Y,
wherein the catalyst support is obtainable from a surfactant assisted method comprising (i) combining aqueous solutions of precursor salts of each metal oxide, with an aqueous solution of at least one cationic, anionic, amphoteric or zwitterionic surfactant; (ii) stirring the combined solutions of (i); (iii) adding a base to adjust the pH of the combined solutions of (i) to 10 to 13 to produce a slurry comprising precipitated support; (iv) allowing the slurry to age at elevated temperatures; (v) isolating the precipitated support from the slurry; (vi) optionally washing the isolated support to remove residual surfactant or solvent and (vii) drying and calcining the isolated support; and
wherein the catalyst support is suitable for use in a reforming process.

2. The catalyst support of claim 1, wherein $M^1$ and $M^2$ are different.

3. The catalyst support of claim 1, wherein a is 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59 or 0.60;
b is 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40;
c is 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40; and
d is 0, 0.010, 0.015, 0.020, 0.025, 0.030, 0.035, 0.040, 0.045, 0.050, 0.055, 0.060, 0.065, 0.070, 0.075, 0.080, 0.085, 0.090, 0.095, 0.100, 0.105, 0.110, 0.115, 0.120, 0.125, 0.130, 0.135, 0.140, 0.145, 0.150, 0.155, 0.160, 0.165, 0.170, 0.175, 0.180, 0.185, 0.190, 0.195 or 0.200.

4. The catalyst support of claim 1 or 3, wherein d is 0, and c is 0.050, 0.055, 0.060, 0.065, 0.070, 0.075, 0.080, 0.085, 0.090, 0.095, 0.10, 0.105, 0.110, 0.115, 0.120, 0.125, 0.130, 0.135, 0.140, 0.145, 0.150, 0.155, 0.160, 0.165, 0.170, 0.175, 0.180, 0.185, 0.190, 0.195, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40.

5. The catalyst support of claim 1 or 3, wherein d is greater than 0, and c is 0.05, 0.055, 0.060, 0.065, 0.070, 0.075, 0.080, 0.085, 0.090, 0.095, 0.100, 0.105, 0.110, 0.115, 0.120, 0.125, 0.130, 0.135, 0.140, 0.145, 0.150, 0.155, 0.160, 0.165, 0.170, 0.175, 0.180, 0.185, 0.190, 0.195 or 0.200.

6. The catalyst support of claim 1 or 3, wherein c and d are the same and are 0.050, 0.055, 0.060, 0.065, 0.070, 0.075, 0.080, 0.085, 0.090, 0.095, 0.100, 0.105, 0.110, 0.115, 0.120, 0.125, 0.130, 0.135, 0.140, 0.145 or 0.150.

7. The catalyst support of claim 1 or 3, wherein $M^1$ and $M^2$ are independently selected from the group consisting of Ca, La, Y, Gd and Mg.

8. The catalyst support of claim 1 or 3, wherein d is 0, and $M^1$ is selected from the group consisting of Al, Ba, Ca, Gd, Hf, La, Mg, Pr, Sm, Sr, Tb and Y, preferably Ca, La, Y, Gd and Mg.

9. The catalyst support of claim 1 or 3, wherein, d is greater than 0, and $M^1$ and $M^2$ are independently selected from the group consisting of Ca, La and Y.

10. The catalyst support of claim 9, wherein $M^1$ is Ca or La and $M^2$ is Y.

11. The catalyst support of any one of claims 1 to 10, further comprising an additional one or more different metal oxides selected from main group metals, transition metals and inner transition metals.

12. The catalyst support of any one of claims 1 to 11, wherein the molar ratio of surfactant to metal oxide precursors is 0.4 to 0.6 or 0.6 to 1.5.

13. A catalyst of the formula (II):

$$Y\%Ni/Ce_aZr_bM^1_cW^2_dO_2 \qquad (II)$$

wherein

Y% is percent, by weight of the catalyst, of Ni and is 0.1 to 10.0; and
$Ce_aZr_bM^1_cM^2_dO_2$ is the support of formula (I) as defined in any one of claims 1-12,
wherein the catalyst, when used in a reforming process, converts a fuel-based feedstock into a product comprising hydrogen.

14. The catalyst of claim 13 selected from:

$$5\%Ni/Ce_{0.5}Zr_{0.33}M^1_{0.17} M^2_{0.0}O_2,$$

wherein $M^1$ is selected from La, Al, Ba, Ca, Hf, Pr, Sm, Sr, Tb, Gd, Mg and Y;

$$5\%Ni/Ce_{0.55}Zr_{0.37}M^1_{0.08}M^2_{0.0}O_2,$$

wherein $M^1$ is selected from La and Ca; and

$$5\%Ni/Ce_{0.41}Zr_{0.27}M^1_{0.32}M^2_{0.0}O_2,$$

wherein $M^1$ is selected from La and Ca.

15. A process for the conversion of a fuel-based feedstock into hydrogen comprising (a) treating a catalyst of the formula (II) as defined in claim 13 or 14 under conditions to reduce NiO to metallic Ni to provide a reduced catalyst; and (b) contacting a reactant comprising the fuel-based feedstock with the reduced catalyst under conditions for the conversion of the fuel-based feedstock into a product comprising hydrogen, wherein the conditions for the conversion of the reactant comprising fuel-based feedstock to product comprising $H_2$ are $CO_2$ reforming of methane and other hydrocarbons, partial oxidation of gasoline, partial oxidation of diesel, partial oxidation of other hydrocarbons and their mixtures, autothermal reforming of diesel and other hydrocarbons, steam assisted $CO_2$ reforming of methane and other hydrocarbons or their mixtures, steam reforming of methane or other hydrocarbons and their mixtures, gas phase steam reforming of oxygenated hydrocarbons and their mixtures, or a combination of these processes and wherein the conditions to reduce NiO to metallic Ni to provide a reduced catalyst comprise a temperature of 650 °C to 750 °C, in an atmosphere of 1% to 10% $H_2$ with the balance being $N_2$.

16. The process of claim 15, wherein the process is performed as a continuous process where the reactant comprising fuel-based feedstock is in the form of a gaseous, liquid or vaporized input stream and the hydrogen product is comprised in an output stream that is optionally treated using known methods to separate and purify the hydrogen gas.

**Patentansprüche**

1.  Katalysatorträger der Formel (I):

$$Ce_aZr_bM^1{}_cM^2{}_dO_2 \qquad (I)$$

wobei

a 0,40 bis 0,60 ist;
b 0,20 bis 0,40 ist;
c 0,05 bis 0,40 ist;
d 0 bis 0,20 ist;
a + b + c + d 1 ist; und
$M^1$ und $M^2$ unabhängig voneinander ausgewählt sind aus der Gruppe bestehend aus Al, Ba, Ca, Gd, Hf, La, Mg, Pr, Sm, Sr, Tb und Y,
wobei der Katalysatorträger aus einem tensidunterstützten Verfahren erhältlich ist, das Folgendes umfasst: (i) Kombinieren wässriger Lösungen von Vorläufersalzen jedes Metalloxids mit einer wässrigen Lösung von mindestens einem kationischen, anionischen, amphoteren oder zwitterionischen Tensid; (ii) Rühren der kombinierten Lösungen von (i); (iii) Hinzufügen einer Base, um den pH-Wert der kombinierten Lösungen von (i) auf 10 bis 13 einzustellen, um eine Aufschlämmung herzustellen, die einen ausgefällten Träger umfasst; (iv) Alternlassen der Aufschlämmung bei erhöhten Temperaturen; (v) Isolieren des ausgefällten Trägers von der Aufschlämmung; (vi) gegebenenfalls Waschen des isolierten Trägers, um restliches Tensid oder Lösungsmittel zu entfernen, und (vii) Trocknen und Kalzinieren des isolierten Trägers; und
wobei der Katalysatorträger zur Verwendung in einem Reformierungsverfahren geeignet ist.

2.  Katalysatorträger nach Anspruch 1, wobei $M^1$ und $M^2$ unterschiedlich sind.

3.  Katalysatorträger nach Anspruch 1, wobei a 0,40, 0,41, 0,42, 0,43, 0,44, 0,45, 0,46, 0,47, 0,48, 0,49, 0,50, 0,51, 0,52, 0,53, 0,54, 0,55, 0,56, 0,57, 0,58, 0,59 oder 0,60 ist;
b 0,20, 0,21, 0,22, 0,23, 0,24, 0,25, 0,26, 0,27, 0,28, 0,29, 0,30, 0,31, 0,32, 0,33, 0,34, 0,35, 0,36, 0,37, 0,38, 0,39 oder 0,40 ist;
c 0,05, 0,06, 0,07, 0,08, 0,09, 0,10, 0,11, 0,12, 0,13, 0,14, 0,15, 0,16, 0,17, 0,18, 0,19, 0,20, 0,21, 0,22, 0,23, 0,24, 0,25, 0,26, 0,27, 0,28, 0,29, 0,30, 0,31, 0,32, 0,33, 0,34, 0,35, 0,36, 0,37, 0,38, 0,39 oder 0,40 ist; und
d 0, 0,010, 0,015, 0,020, 0,025, 0,030, 0,035, 0,040, 0,045, 0,050, 0,055, 0,060, 0,065, 0,070, 0,075, 0,080, 0,085, 0,090, 0,095, 0,100, 0,105, 0,110, 0,115, 0,120, 0,125, 0,130, 0,135, 0,140, 0,145, 0,150, 0,155, 0,160, 0,165, 0,170, 0,175, 0,180, 0,185, 0,190, 0,195 oder 0,200 ist.

4.  Katalysatorträger nach Anspruch 1 oder 3, wobei d 0 ist und c 0,050, 0,055, 0,060, 0,065, 0,070, 0,075, 0,080, 0,085, 0,090, 0,095, 0,10, 0,105, 0,110, 0,115, 0,120, 0,125, 0,130, 0,135, 0,140, 0,145, 0,150, 0,155, 0,160, 0,165, 0,170, 0,175, 0,180, 0,185, 0,190, 0,195, 0,20, 0,21, 0,22, 0,23, 0,24, 0,25, 0,26, 0,27, 0,28, 0,29, 0,30 0,31, 0,32, 0,33, 0,34, 0,35, 0,36, 0,37, 0,38, 0,39 oder 0,40 ist.

5.  Katalysatorträger nach Anspruch 1 oder 3, wobei d größer als 0 ist und c 0,05, 0,055, 0,060, 0,065, 0,070, 0,075, 0,080, 0,085, 0,090, 0,095, 0,100, 0,105, 0,110, 0,115, 0,120, 0,125, 0,130, 0,135, 0,140, 0,145, 0,150, 0,155, 0,160, 0,165, 0,170, 0,175, 0,180, 0,185, 0,190, 0,195 oder 0,200 ist.

6.  Katalysatorträger nach Anspruch 1 oder 3, wobei c und d gleich sind und 0,050, 0,055, 0,060, 0,065, 0,070, 0,075, 0,080, 0,085, 0,090, 0,095, 0,100, 0,105, 0,110, 0,115, 0,120, 0,125, 0,130, 0,135, 0,140, 0,145 oder 0,150 sind.

7.  Katalysatorträger nach Anspruch 1 oder 3, wobei $M^1$ und $M^2$ unabhängig voneinander ausgewählt sind aus der Gruppe bestehend aus Ca, La, Y, Gd und Mg.

8.  Katalysatorträger nach Anspruch 1 oder 3, wobei d 0 ist und $M^1$ ausgewählt ist aus der Gruppe bestehend aus Al, Ba, Ca, Gd, Hf, La, Mg, Pr, Sm, Sr, Tb und Y, vorzugsweise Ca, La, Y, Gd und Mg.

9.  Katalysatorträger nach Anspruch 1 oder 3, wobei d größer als 0 ist und $M^1$ und $M^2$ unabhängig voneinander ausgewählt sind aus der Gruppe bestehend aus Ca, La und Y.

**10.** Katalysatorträger nach Anspruch 9, wobei $M^1$ Ca oder La ist und $M^2$ Y ist.

**11.** Katalysatorträger nach einem der Ansprüche 1 bis 10, der ferner ein zusätzliches oder mehrere verschiedene Metalloxide umfasst, die aus Metallen der Hauptgruppe, Übergangsmetallen und inneren Übergangsmetallen ausgewählt sind.

**12.** Katalysatorträger nach einem der Ansprüche 1 bis 11, wobei das Molverhältnis von Tensid zu Metalloxidvorläufern 0,4 bis 0,6 oder 0,6 bis 1,5 beträgt.

**13.** Katalysator der Formel (II):

$$Y\%Ni/Ce_aZr_bM^1_cM^2_dO_2 \qquad (II)$$

wobei

Y% Gewichtsprozent des Katalysators von Ni und ist 0,1 bis 10,0 ist; und
$Ce_aZr_bM^1_cM^2_dO_2$ der Träger der Formel (I) wie in einem der Ansprüche 1 bis 12 definiert ist,
wobei der Katalysator, wenn er in einem Reformierungsprozess verwendet wird, ein Ausgangsmaterial auf Kraftstoffbasis in ein Produkt umwandelt, das Wasserstoff umfasst.

**14.** Katalysator nach Anspruch 13, ausgewählt aus:

$$5\%Ni/Ce_{0.5}Zr_{0.33}M^1_{0.17}M^2_{0.0}O_2,$$

wobei $M^1$ aus La, Al, Ba, Ca, Hf, Pr, Sm, Sr, Tb, Gd, Mg und Y ausgewählt ist;

$$5\%Ni/Ce_{0.55}Zr_{0.37}M^1_{0.08}M^2_{0.0}O_2,$$

wobei $M^1$ aus La und Ca ausgewählt ist; und

$$5\%Ni/Ce_{0.41}Zr_{0.27}M^1_{0.32}M^2_{0.0}O_2,$$

wobei $M^1$ aus La und Ca ausgewählt ist.

**15.** Verfahren zur Umwandlung eines brennstoffbasierten Einsatzmaterials in Wasserstoff, das Folgendes umfasst: (a) Behandeln eines Katalysators der Formel (II) wie in Anspruch 13 oder 14 definiert unter Bedingungen, um NiO zu metallischem Ni zu reduzieren, um einen reduzierten Katalysator bereitzustellen; und (b) Inkontaktbringen eines Reaktanten, der das Ausgangsmaterial auf Brennstoffbasis enthält, mit dem reduzierten Katalysator unter Bedingungen für die Umwandlung des Ausgangsmaterials auf Brennstoffbasis in ein Produkt, das Wasserstoff enthält, wobei die Bedingungen für die Umwandlung des Ausgangsmaterials, das den Reaktanten enthält, in ein Produkt, das $H_2$ enthält, Folgendes sind: $CO_2$-Reformierung von Methan und anderen Kohlenwasserstoffen, partielle Oxidation von Benzin, Teiloxidation von Dieselkraftstoff, Teiloxidation anderer Kohlenwasserstoffe und ihren Gemischen, autotherme Reformierung von Dieselkraftstoff und anderen Kohlenwasserstoffen, dampfunterstützte $CO_2$-Reformierung von Methan und anderen Kohlenwasserstoffen oder ihren Gemischen, Dampfreformierung von Methan oder anderen Kohlenwasserstoffen und ihren Gemischen, Gasphasendampfreformierung von sauerstoffhaltigen Kohlenwasserstoffen und ihren Gemischen oder eine Kombination dieser Verfahren, wobei die Bedingungen zur Reduktion von NiO zu metallischem Ni zur Bereitstellung eines reduzierten Katalysators eine Temperatur von 650 ° C bis 750 ° C in einer Atmosphäre von 1% bis 10% $H_2$ umfassen, wobei der Rest $N_2$ ist.

**16.** Verfahren nach Anspruch 15, wobei das Verfahren als kontinuierliches Verfahren durchgeführt wird, bei dem der Reaktant, der ein Ausgangsmaterial auf Brennstoffbasis umfasst, in Form eines gasförmigen, flüssigen oder verdampften Eingangsstroms vorliegt und das Wasserstoffprodukt in einem Ausgangsstrom enthalten ist, der gegebenenfalls mit bekannten Verfahren behandelt wird, um das Wasserstoffgas abzutrennen und zu reinigen.

**Revendications**

**1.** Support de catalyseur de formule (I) :

$$Ce_aZr_bM^1_cM^2_dO_2 \qquad (I)$$

où

a vaut 0,40 à 0,60 ;
b vaut 0,20 à 0,40 ;
c vaut 0,05 à 0,40 ;
d vaut 0 à 0,20 ;
a + b + c + d vaut 1 ; et
$M^1$ et $M^2$ sont indépendamment choisis dans le groupe constitué par Al, Ba, Ca, Gd, Hf, La, Mg, Pr, Sm, Sr, Tb et Y, le support de catalyseur pouvant être obtenu à partir d'un procédé assisté par tensioactif comprenant (i) la combinaison de solutions aqueuses de sels précurseurs de chaque oxyde de métal, avec une solution aqueuse d'au moins un tensioactif cationique, anionique, amphotère ou zwitterionique ; (ii) l'agitation des solutions combinées de (i) ; (iii) l'addition d'une base pour ajuster le pH des solutions combinées de (i) à 10 à 13 afin de produire une suspension épaisse comprenant un support précipité ; (iv) le fait de laisser la suspension épaisse vieillir à des températures élevées ; (v) l'isolement du support précipité à partir de la suspension épaisse ; (vi) éventuellement le lavage du support isolé pour éliminer le tensioactif résiduel ou le solvant et (vii) le séchage et la calcination du support isolé ; et
le support de catalyseur est approprié pour une utilisation dans un processus de reformage.

2. Support de catalyseur de la revendication 1, dans lequel $M^1$ et $M^2$ sont différents.

3. Support de catalyseur de la revendication 1, dans lequel a vaut 0,40, 0,41, 0,42, 0,43, 0,44, 0,45, 0,46, 0,47, 0,48, 0,49, 0,50, 0,51, 0,52, 0,53, 0,54, 0,55, 0,56, 0,57, 0,58, 0,59 ou 0,60 ;
b vaut 0,20, 0,21, 0,22, 0,23, 0,24, 0,25, 0,26, 0,27, 0,28, 0,29, 0,30, 0,31, 0,32, 0,33, 0,34, 0,35, 0,36, 0,37, 0,38, 0,39 ou 0,40 ;
c vaut 0,05, 0,06, 0,07, 0,08, 0,09, 0,10, 0,11, 0,12, 0,13, 0,14, 0,15, 0,16, 0,17, 0,18, 0,19, 0,20, 0,21, 0,22, 0,23, 0,24, 0,25, 0,26, 0,27, 0,28, 0,29, 0,30, 0,31, 0,32, 0,33, 0,34, 0,35, 0,36, 0,37, 0,38, 0,39 ou 0,40 ; et
d vaut 0, 0,010, 0,015, 0,020, 0,025, 0,030, 0,035, 0,040, 0,045, 0,050, 0,055, 0,060, 0,065, 0,070, 0,075, 0,080, 0,085, 0,090, 0,100, 0,105, 0,110, 0,115, 0,120, 0,125, 0,130, 0,135, 0,140, 0,145, 0,150, 0,155, 0,160, 0,165, 0,170, 0,175, 0,180, 0,185, 0,190, 0,195 ou 0,200.

4. Support de catalyseur de la revendication 1 ou 3, dans lequel d vaut 0 et c vaut 0,050, 0,055, 0,060, 0,065, 0,070, 0,075, 0,080, 0,085, 0,090, 0,10, 0,105, 0,110, 0,115, 0,120, 0,125, 0,130, 0,135, 0,140, 0,145, 0,150, 0,155, 0,160, 0,165, 0,170, 0,175, 0,180, 0,185, 0,190, 0,195, 0,20, 0,21, 0,22, 0,23, 0,24, 0,25, 0,26, 0,27, 0,28, 0,29, 0,30, 0,31, 0,32, 0,33, 0,34, 0,35, 0,36, 0,37, 0,38, 0,39 ou 0,40.

5. Support de catalyseur de la revendication 1 ou 3, dans lequel d est supérieur à 0 et c vaut 0,05, 0,055, 0,060, 0,065, 0,070, 0,075, 0,080, 0,085, 0,090, 0,100, 0,105, 0,110, 0,115, 0,120, 0,125, 0,130, 0,135, 0,140, 0,145, 0,150, 0,155, 0,160, 0,165, 0,170, 0,175, 0,180, 0,185, 0,190, 0,195 ou 0,200.

6. Support de catalyseur de la revendication 1 ou 3, dans lequel c et d sont identiques et valent 0,050, 0,055, 0,060, 0,065, 0,070, 0,075, 0,080, 0,085, 0,090, 0,095, 0,100, 0,105, 0,110, 0,115, 0,120, 0,125, 0,130, 0,135, 0,140, 0,145 ou 0,150.

7. Support de catalyseur de la revendication 1 ou 3, dans lequel $M^1$ et $M^2$ sont indépendamment choisis dans le groupe constitué par Ca, La, Y, Gd et Mg.

8. Support de catalyseur de la revendication 1 ou 3, dans lequel d vaut 0 et $M^1$ est choisi dans le groupe constitué par Al, Ba, Ca, Gd, Hf, La, Mg, Pr, Sm, Sr, Tb et Y, de préférence Ca, La, Y, Gd et Mg.

9. Support de catalyseur de la revendication 1 ou 3, dans lequel d est supérieur à 0, et $M^1$ et $M^2$ sont indépendamment choisis dans le groupe constitué par Ca, La et Y.

10. Support de catalyseur de la revendication 9, dans lequel $M^1$ est Ca ou La et $M^2$ est Y.

11. Support de catalyseur de l'une quelconque des revendications 1 à 10, comprenant en outre au moins un oxyde métallique différent supplémentaire choisi dans les métaux de groupe principal, les métaux de transition et les métaux de transition interne.

12. Support de catalyseur de l'une quelconque des revendications 1 à 11, dans lequel le rapport molaire entre le tensioactif et les précurseurs d'oxyde de métal est de 0,4 à 0,6 ou de 0,6 à 1,5.

13. Catalyseur de formule (II) :

$$Y\%Ni/Ce_aZr_bM^1_cM^2_dO_2 \qquad (II)$$

où

Y% est le pourcentage, en poids du catalyseur, de Ni et est de 0,1 à 10.0 ; et $Ce_aZr_bM^1_cM^2_dO_2$ est le support de formule (I) tel que défini dans l'une quelconque des revendications 1 à 12,
le catalyseur, lorsqu'il est utilisé dans un processus de reformage, convertissant une charge à base de combustible en un produit comprenant de l'hydrogène.

14. Catalyseur de la revendication 13 choisi parmi :

$$5\%Ni/Ce_{0,5}Zr_{0.33}M^1_{0,17}M^2_{0,0}O_2,$$

où $M^1$ est choisi parmi La, Al, Ba, Ca, Hf, Pr, Sm, Sr, Tb, Gd, Mg et Y ;

$$5\%Ni/Ce_{0,55}Zr_{0,37}M^1_{0,08}M^2_{0,0}O_2,$$

où $M^1$ est choisi parmi La et Ca ; et

$$5\%Ni/Ce_{0,41}Zr_{0,27}M^1_{0,32}M^2_{0,0}O_2,$$

où $M^1$ est choisi parmi La et Ca.

15. Processus pour la conversion d'une charge à base de combustible en hydrogène, comprenant (a) le traitement d'un catalyseur de formule (II) tel que défini dans la revendication 13 ou 14 dans des conditions permettant de réduire NiO en Ni métallique pour fournir un catalyseur réduit ; et (b) la mise en contact d'un réactif comprenant la charge à base de combustible avec le catalyseur réduit dans des conditions permettant la conversion de la charge à base de combustible en un produit comprenant de l'hydrogène, les conditions permettant la conversion du réactif comprenant la charge à base de combustible en produit comprenant $H_2$ étant le reformage au $CO_2$ de méthane ou d'autres hydrocarbures, l'oxydation partielle d'essence, l'oxydation partielle de diésel, l'oxydation partielle d'autres hydrocarbures et de leurs mélanges, le reformage auto-thermique de diésel et d'autres hydrocarbures, le reformage ay $CO_2$ assisté par vapeur de méthane et d'autres hydrocarbures et de leurs mélanges, le reformage à la vapeur de méthane et d'autres hydrocarbures et de leurs mélanges, le reformage à la vapeur en phase gazeuse d'hydrocarbures oxygénés et de leurs mélanges, ou une combinaison de ces processus et les conditions permettant une réduction de NiO en Ni métallique pour fournir un catalyseur réduit comprenant une température de 650 °C à 750 °C, dans une atmosphère de 1% à 10 % de $H_2$, le reste étant constitué de $N_2$.

16. Processus de la revendication 15, le processus étant réalisé sous la forme d'un processus en continu où le réactif comprenant la charge à base de combustible se présente ou la forme d'un courant d'entrée gazeux, liquide ou vaporisé et le produit d'hydrogène est compris dans un courant de sortie qui est éventuellement traité à l'aide de procédés connus permettant de séparer et de purifier l'hydrogène gazeux.

Figure 1a

Figure 1b

Figure 1c

Figure 2

Figure 3a

Figure 3b

Figure 4

Figure 5a

Figure 5b

**OSC: Experimental Schematic**

Operating Conditions: *Temperature = 800 °C; Flow rate = 40 sccm; Sample weight = 50 mg;*

**Figure 6**

Figure 7

$Ce_{0.5}Zr_{0.33}Y_{0.17}O_2$

$Ce_{0.5}Zr_{0.33}La_{0.17}O_2$

Figure 8a

Figure 8b

Figure 9

EP 2 542 338 B1

Figure 10

Figure 11

Figure 12a

Figure 12b

Figure 13

Figure 14a

Figure 14b

EP 2 542 338 B1

Figure 14c

Figure 15

Figure 16

Figure 17

Figure 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CA 2429412 A1
- WO 2009158009 A1
- WO 2009028113 A1
- US 7824656 B2

### Non-patent literature cited in the description

- Energy Density of Hydrogen. The Physics Factbook™
- **WAGNER, U. ; RICHTER, S.** 7 Hydrogen technologies. SpringerMaterials - The Landolt-Bornstein Database
- **WILLIAM E. EVENSON.** The potential for a H2 energy economy. *R &D of energy technologies, Annex IV - Hydrogen energy,* 207
- **JOAN M. OGDEN.** Prospects for building a H2 energy infrastructure. *Annu. Rev. Energy. Environ.,* 1999, vol. 24, 227-79
- **HU, Y. H. ; RUCKENSTEIN, E.** *AdV. Catal.,* 2004, vol. 48, 297
- **RAN, R. ; XIONG, G. ; SHENG, S. ; YANG, W. ; STROH, N. ; BRUNNER, H.** Catalytic Partial Oxidation of n-heptane for Hydrogen Production. *Catalysis Letters,* 2003, vol. 88, 55-59
- **ZHU, W. ; XIONG, G. ; HAN, W. ; YANG, W.** Catalytic Partial Oxidation of Gasoline to Syngas in a Dense Membrane Reactor. *Catalysis Today,* 2004, vol. 93-95, 257-261
- **MOON, D. J. ; RYU, J. W.** Partial Oxidation Reforming Catalyst for Fuel Cell-Powered Vehicles Applications. *Catalysis Letters,* 2003, vol. 89, 207-212
- **T. AICHER ; B. LENZ ; F. GSCHNELL ; U. GROOS ; F. FEDERICI ; L. CAPRILE ; L. PARODI.** Fuel processors for fuel cell APU applications. *Journal of Power Sources,* 2006, vol. 154, 503
- **S.L. DOUVARTZIDES ; F.A. COUTELIERIS ; A.K. DEMIN ; P.E. TSIAKARAS.** Fuel options for solid oxide fuel cells: a thermodynamic analysis. *AIChE J.,* 2003, vol. 49, 248-257
- *Solid State Energy Conversion Alliance (SECA) program, www.seca.doe.gov/*
- **SONG, C.** Fuel processing for low-temperature and high-temperature fuel cells - Challenges, and opportunities for sustainable development in the 21st century. *Catalysis Today,* 2002, vol. 77, 17-49
- Economic Impact of Ethanol Production. Ethanol Across America Publication, 2006
- **GALDAMEZ, J.R. ; GARCIA, L. ; BILBAO, R.** *Energy & Fuels,* 2005, vol. 19, 1133-1142
- **VAGIA, E. CH. ; LEMONIDOU, A.A.** *Int. J. Hydrogen Energy,* 2007, vol. 32, 212-223
- **LOJOIU, E.E. ; DOMINE, E.M. ; DAVIDIAN, T. ; GUILHAUME, N. ; MIRODATOS,C.** *Applied Catalysis,* 2007, vol. 323, 147-161
- **MARBAN, G. ; VALDES-SOLIS, T.** *International Journal of Hydrogen energy,* 2007, vol. 32, 1625-1637
- **DAVDA, R.R. ; SHABAKER, J.W. ; HUBER, G.W. ; CORTRIGHT, R.D. ; DUMESIC, J.A.** *Applied Catalysis B,* 2005, vol. 56, 171-186
- **NI, M. ; LEUNG, D.Y.C. ; LEUNG, M.K.H.** *Int. J. Hydrogen Energy,* 2007, vol. 32, 3228-3247
- **WANG, D. ; MONTANE, D. ; CHORNET, E.** *Applied Catalysis,* 1996, vol. 143, 245-270
- Auger and X-Ray Photoelectron Spectroscopy. Practical Surface Analysis. Wiley, 1990, vol. 1
- **WAGNER, C. D. ; RIGGS, W. M. ; DAVIS, L. E. ; MOULDER, J. F.** Handbook of X-ray Photoelectron Spectroscopy. Perkin-Elmer Corporation, 1978
- **M. OZAWA ; C.K. LOONG.** *Catal. Today,* 1999, vol. 50, 329
- **IGLESIA, E. ; BOUDART, M. J.** *Catal.,* 1983, vol. 81, 204-213
- **TSAY, M.-T. ; CHANG, F.-W.** *Appl. Catal. A,* 2000, vol. 203, 15-22
- IUPAC Recommendations. *Pure Appl. Chem.,* 1994, vol. 66, 1739
- **FRANÇOISE ROUQUÉROL ; JEAN ROUQUÉROL ; K. S. W. SING.** Adsorption by powders and porous solids. Academic Press, 1999
- **B.M. REDDY ; A. KHAN.** Catalysis Surveys from Asia. 2005, vol. 9, 155
- **A.KHAN ; P.G. SMIRNIOTIS.** *J. Mol. Catalysis A: Chemical,* 2008, vol. 280, 43
- **F. GIORDANO ; A. TROVARELLI ; C. DE LEITENBURG ; M. GIONA.** *J. Catal.,* 2000, vol. 193, 273
- **X.-M. LIN ; L.-P. LI ; G.-S. LI ; W.-H. SU.** *Mater. Chem. Phys.,* 2001, vol. 69, 236

- **J.R. MC BRIDE ; K.C. HASS ; B.D. POINDEXTER ; W.H. WEBER.** *J. Appl. Phys.,* 1994, vol. 76, 2435
- **A. BENSALEM ; F. BOZON-VERDURAZ ; M. DELAMAR ; G. BUGLI.** *Appl. Catal. A Gen.,* 1995, vol. 121, 81
- **E. PAPARAZZO ; G.M. INGO ; N. ZACCHETTI.** *J. Vac. Sci. Technol. A,* 1991, vol. 9, 1416
- **G. PRALINE ; B.E. KOEL ; R.L. HANCE ; H.-I. LEE ; J.M. WHITE ; J. ELECT.** *Spect. Relat. Phenom.,* 1980, vol. 21, 71
- **A. PFAU ; K.D. SCHIERBAUM.** *Surf. Sci.,* 1994, vol. 321, 71
- **A. GALTAYRIES ; R. SPORKEN ; J. RIGA ; G. BLANCHARD ; R. CAUDANO.** *J. Elec. Spect. Relat. Phenom.,* 1998, vol. 88-91, 951
- **A. BURROUGHS ; A.F. HAMNETT ; G. ORCHARD ; G. THORNTON.** *J. Chem. Soc. Dalton Trans.,* 1976, vol. 1, 1686
- **D.A. CREASER ; P.G. HARRISON ; M.A. MORRIS ; B.A. WOLFINDALE.** *Catal. Lett.,* 1994, vol. 23, 13
- Catalysis by ceria and related material. Imperial College Press, 2002
- **F. DONG ; A. SUDA ; T. TANABE ; Y. NAGAI ; H. SOBUKAWA ; H. SHINJOH ; M. SUGIURA ; C. DESCORME ; D. DUPREZ.** *Catalysis Today,* 2004, vol. 93-95, 827
- Agency for Toxic Substances and Disease Registry (ATSDR). Toxicological profile for fuel oils. U.S. Department of Health and Human Services, Public Health Service, 1995
- An Interdisciplinary Approach. **ALFONS BAIKER.** Heterogeneous Catalysis. 2001, vol. 55, 796